# EUROPEAN PATENT APPLICATION

(11) **EP 3 306 028 A1**
(43) Date of publication of application: **11.04.2018**
(21) Application number: 16803077.3
(22) Date of filing: 19.05.2016
(51) Int. Cl.: E06B 9/324, E06B 9/323

(54) **BRAKING DEVICE, AND SHIELDING DEVICE USING SAME**

(30) Priority: 05.06.2015 JP 2015115244
(71) Applicant: Tachikawa Corporation, Tokyo 108-8334 (JP); Tok Bearing Co., Ltd., Itabashi-ku, Tokyo 174-8501 (JP)
(72) Inventor: YAMAGISHI, Kazuto, Tokyo 108-8334 (JP); UEMATSU,Takatoshi, Tokyo 108-8334 (JP); EBATO, Takenobu, Tokyo 108-8334 (JP); ORITA, Nobutoshi, Tokyo 174-8501 (JP); TAKAHASHI, Daisuke, Tokyo 174-8501 (JP)
(74) Representative: Gulde & Partner
(86) International application number: PCT/JP2016/064949
(87) International publication number: WO 2016/194642

(57) **Abstract**

Provided is a braking device configured to release a cord in a non-bent state so that the operation force required to pull cords is reduced and the behavior of slats is stabilized during an automatic fall, and a sunlight shielding device using the braking device. A braking device for braking movement of a cord includes a movement converter configured to convert movement of a cord into movement of another member. The movement converter includes sandwiching object configured to allow the cord to be sandwiched. The sandwiching object is configured to change a sandwiched state so that the cord is sandwiched by the sandwiching object when the cord and the sandwiching object move relatively in one direction and the cord is released in a non-bent state when the cord and the sandwiching object move relatively in another direction.

## Description

### TECHNICAL FIELD

The present invention relates to a braking device and a shielding device using the same and, in particular, to a braking device and a shielding device using the same that are suitable for cases in which the movement of a cord can be slowed appropriately.

### BACKGROUND ART

In addition to roller curtains and blinds, semiautomated, suspended/supported shielding devices such as accordion curtains, pleated screens, and partitions have been commercialized. For example, a horizontal blind is opened by pulling an operation cord and thus raising slats and a bottom rail serving as shielding members. On the other hand, the horizontal blind is closed by lowering the slats and bottom rail, typically using the gravity based on the self-weight of the slats and bottom rail. At this time, there is used a known mechanism that reduces the descent momentum of the slats and bottom rail by applying a braking force to a hoisting cord that moves in association with the descent of the slats and bottom rail.

Patent Literature 1 discloses a horizontal blind operation apparatus that deactivates a slat self-weight fall prevention device disposed in a head box so that slats can be lowered smoothly and at appropriate speed, in accordance with an operation of an operation rod for adjusting the slat angle.

### Citation List

### Patent Literature

[Patent Literature 1] Japanese Unexamined Patent Application Publication No. Hei (1997) 10-140950

### SUMMARY OF THE INVENTION

### Technical Problem

In the case of the apparatus disclosed in Patent Literature 1, even if the sandwiched cord is released, the cord remains bent. For this reason, the operation force required to pull hoisting cords may be increased, and the behavior of slats may be destabilized during an automatic fall.

Accordingly, an object of the present invention is to provide a braking device configured to release a cord in a non-bent state so that the operation force required to pull the cords is reduced and the behavior of slats is stabilized during an automatic fall, and a shielding device using the braking device.

### Solution to Problem

The present invention provides a braking device for braking movement of a cord. The braking device includes a movement converter configured to convert movement of a cord into movement of another member. The movement converter comprises a sandwiching object configured to allow the cord to be sandwiched. The sandwiching object is configured to change a sandwiched state so that the cord is sandwiched by the sandwiching object when the cord and the sandwiching object move relatively in one direction and the cord is released in a non-bent state when the cord and the sandwiching object move relatively in another direction.

Various embodiments of the present invention are described below. Any of the embodiments described below can be combined with each other.

Preferably, the braking device further includes a resistance provider configured to, when the cord moves relatively in the one direction, generate resistance in association with movement of the cord.

Preferably, the sandwiching object includes a roller disposed in a position in which the roller can contact the cord and configured to be movable in a predetermined range and a sandwiching member disposed so that the cord is sandwiched between the sandwiching member and the roller. The roller is configured to move to a first position when the cord and the roller move relatively in one direction and to move to a second position when the cord and the roller move relatively in another direction.

Preferably, the roller is configured to be always kept in contact with the cord between the first position and the second position.

Preferably, the roller includes an energizer configured to energize the roller so that the roller moves in a direction in which the roller contacts the cord.

Preferably, the cord is sandwiched between the roller and the sandwiching member when the roller is located in the first position, and the cord is released in a non-bent state when the roller is located in the second position.

Preferably, the sandwiching member is a slope formed on a fixed member, and the roller moves along the slope so as to approach the cord.

Preferably, the roller is configured to move so that friction acting between the roller and the cord when the roller is located in the second position becomes smaller than friction acting between the roller and the cord when the roller is located in the first position.

Preferably, the braking device further includes a resistance provider configured to provide rotational resistance to the roller. Preferably, the roller is configured to be rotatable in accordance with movement of the cord in the one direction, and the roller continuously transmits rotation to the resistance provider even if the roller moves from the first position to the second position.

Preferably, the braking device further includes a resistance provider configured to, when the cord moves relatively in the one direction, generate resistance in association with movement of the cord. Preferably, when the roller is located in the first position, rotation of the roller caused by movement of the cord is outputted to the resistance provider, and when the roller is located in the second position, rotation of the roller caused by movement of the cord is not outputted to the resistance provider.

Preferably, the roller transmits rotation to the resistance provider directly or through a transmitter.

Preferably, the roller is configured to be movable in a movable direction including a vertical component with respect to a grounding surface of the braking device, when the roller is located in a first position which is a lower position in the movable direction, the cord is sandwiched between the roller and the sandwiching member, and when the roller is located in a second position which is an upper position in the movable direction, the cord is released in a non-bent state.

Preferably, the braking device further includes an auxiliary roller configured to move in conjunction with the roller. Preferably, when the roller is located in the first position, the cord is sandwiched between the roller, the sandwiching member, and the auxiliary roller.

Preferably, the braking device further includes an output member configured to rotate in the first position in association with rotation of the roller and a resistance provider configured to generate resistance in association with rotation of the output member.

Preferably, there is provided a shielding device including any one of the above braking devices and a sunlight shielding member suspended so as to be able to be raised and lowered in accordance with movement of the cord.

Preferably, there is provided a braking device for braking movement of a cord, wherein the braking device includes a movement converter configured to convert movement of a cord into movement of another member, the movement converter includes sandwiching object configured to allow the cord to be sandwiched, and the sandwiching object is configured to move along a moving direction of the cord so as to approach the cord.

Preferably, the sandwiching object is a pair of rollers, and the braking device further includes a holding member configured to hold the pair of rollers and having a pressing surface that moves the pair of rollers synchronously.

Preferably, a braking device for braking a longitudinal movement of a cord includes a tension transmission roller which clamps the cord between the support column and the support column and rotates by the longitudinal movement of the cord, A pinion gear that rotates together with the tension transmission roller around the rotation axis of the tension transmission roller, a ring gear having an inner peripheral gear meshing with the pinion gear, a resistance imparting rotational resistance to the ring gear Wherein the pinion gear is movable along at least a part of the inner peripheral surface of the ring gear, and the tension transmission roller is arranged such that the pinion gear is engaged with the inner peripheral surface of the ring gear Wherein the braking device is pressed against the cord when moving along one rotation direction.

Preferably, the support column is an idle roller having a rotation axis parallel to the rotation axis of the tension transmission roller.

Preferably, the support pillar moves to the tension transmission roller side with movement of one of the inner circumferential surface of the ring gear of the pinion gear along the rotation direction.

Preferably, the image forming apparatus further comprises an urging member that constantly urges the tension transmission roller so that the tension transmission roller is pressed against the support post.

Preferably, the resistance imparting unit constantly imparts a rotational resistance when the ring gear rotates.

Preferably, the resistance imparting section imparts a rotational resistance when the rotational speed of the ring gear is equal to or higher than a predetermined value.

Preferably, the ring gear has an outer peripheral gear formed on the outer peripheral surface, and the outer peripheral gear meshes with the gear of the resistance applying portion having the rotation resistance.

Preferably, the resistance applying portion is provided at a position overlapping with the ring gear.

Preferably, a casing holding the tension transmission roller is formed concentrically with the inner peripheral surface of the ring gear in a plan view, and a restriction groove is formed in which the axial core of the tension transmission roller is fitted .

Preferably, there is provided a shielding device comprising: the braking device according to any one of the above; and a solar radiation shielding member suspended from the cord in a manner movable up and down by the longitudinal movement of the cord.

### Advantageous Effects of the Invention

According to the braking device thus configured, the sandwiched cord can be released in a non-bent state. Thus, the bending resistance during the release of the cord can be reduced. As a result, the operation force required to pull the cords can be reduced, and the behavior of slats can be stabilized during an automatic fall.

### BRIEF DESCRIPTION OF DRAWINGS

FIG. 1 is a perspective view showing a braking device according to a first embodiment of the present invention.
FIG. 2 is a view of the braking device of FIG. 1 viewed from another angle.
FIG. 3 is a view showing a state in which the cover shown in FIG. 1 is removed.
FIG. 4 is a view of FIG. 3 as seen from the same viewpoint as FIG. 2.
FIG. 5 is a perspective view showing the bracket of FIG. 3; FIG.
FIG. 6 is a view showing a state in which the bracket of FIG. 3 is removed.
FIG. 7 is a plan view of FIG. 6.
FIG. 8 is a plan view showing a state in which the tension transmission roller and the idle roller in FIG. 7 are removed.
FIG. 9 is a view showing the operation of the braking device.
FIG. 10 is a view showing a solar radiation shielding device according to a first embodiment.
Figs. 11A and 11B are exploded perspective views of a braking device 1000 of a second embodiment of the present invention, in which Fig. 11A is a drawing seen from a front-upper side; and Fig. 11B is a drawing seen from a rear-upper side.
Figs. 12A and 11B are exploded perspective views of the braking device 1000 of the second embodiment of the present invention, in which Fig. 12A is a drawing seen from a front-lower side; and Fig. 12B is a drawing seen from a rear-lower side.
Fig. 13 is drawings showing an example in which grooves 709 are formed in a base instead of forming protrusions 341 on weights 340, in which (a) is a plan view; and (b) is a sectional view taken along line S-S.
Figs. 14A to 14C are assembly drawings of the braking device 1000 of the second embodiment of the present invention, in which Fig. 14A is a front perspective view; Fig. 14B is a rear perspective view; and Fig. 14C is a left side view.
Figs. 15A and 15B are assembly drawings of the braking device 1000 of the second embodiment of the present invention, in which Fig. 15A is a plan view; and Fig. 15B is a bottom view.
Figs. 16A and 16B are assembly drawings obtained by removing a case 10A from the braking device 1000 of the second embodiment of the present invention, in which Fig. 16A is a front perspective view; and Fig. 16B is a rear perspective view.
Figs. 17A and 17B are assembly drawings obtained by further removing a slider 220 from Fig. 16, in which Fig. 17A is a front perspective view; and Fig. 17B is a rear perspective view.
Figs. 18A and 18B are assembly drawings obtained by further removing an internal gear-provided carrier 260 from Figs. 17A and 17B, in which Fig. 18A is a front perspective view; and Fig. 18B is a rear perspective view.
Fig. 19 is a sectional view showing the positional relationships between a knurled roller 240, a slider 220, and a pinion gear 50 of the second embodiment of the present invention and is a part of a sectional view passing through an approximate center of a shaft 31 seen from the left side surface of the braking device 1000.
Figs. 20A and 20B are drawings showing an arrangement member 200 of the second embodiment of the present invention, in which Fig. 20A is a perspective view; and Fig. 20B is a front view.
Figs. 21A and 21B are drawings showing the case 10A of the second embodiment of the present invention, in which Fig. 21A is a front perspective view; and Fig. 21B is a rear perspective view.
Figs. 22A and 22B are drawings showing the case 10A of the second embodiment of the present invention, in which Fig. 22A is a plan view; and Fig. 22B is a perspective view seen from below.
Figs. 23A to 23C are drawings showing the slider 220 of the second embodiment of the present invention, in which Fig. 23A is a front perspective view; Fig. 23B is a rear perspective view seen from below; and Fig 23C is a plan view.
Figs. 24A and 24B are drawings showing the case 10A and slider 220 of the second embodiment of the present invention, in which Fig. 24A is a perspective view seen from below; and Fig. 24B is a perspective view seen from above.
Fig. 25 is an exploded perspective view showing members other than the case 10A and slider 220 of the second embodiment of the present invention.
Fig. 26 is a sectional view taken along line A-A in Fig. 14C.
Fig. 27 is a sectional view taken along line B-B in Fig. 15A.
Figs. 28A to 28C are drawings showing an aspect in which the braking device 1000 of the present invention brakes cords CD using Fig. 26, in which Fig. 28A is a drawing showing a state in which no tension is being applied to the cords CD (steady state); Fig. 28B is a drawing showing a state in which tension is being applied to the cords CD and the cords CD are sandwiched between the knurled roller 240 and roller 42 (sandwiched state); and Fig. 28C is a table showing the rotation directions of the members when the state in Fig. 28A is changed to the state in Fig. 28B.
Fig. 29 is are drawings showing the aspect of the movement of the slider 220 corresponding to 28A to 28C.
FIG. 30 is a schematic view of a braking device 4000 according to a third embodiment of the present invention as viewed from a direction perpendicular to the cord.
FIG. 31 is a schematic plan view showing the adherend when the braking device 4000 of FIG. 30 is cut along a line C - C.
FIG. 32A is an end view when the braking device 4000 of FIG. 30 is cut along the line DD,
FIG. 32B is a cross sectional view of the braking device 4000 of FIG. 30 taken along the line E -
FIG. 33 is a schematic plan view showing the centrifugal brake 480 of the resistance applying portion RA of the braking device 4000 of FIG. 30.
FIG. 34 is an explanatory view showing a state in which a cramped body of the braking device 4000 in FIG. 32 is braking the cord CD, FIG 34A shows a state in which the clamping body sandwiches the cord CD, FIG. 34B Indicates a state in which the code CD is released from the body by the body.
FIG. 35 is an explanatory view showing the operation of the motion converting unit DT of the braking device 4000 of FIG. 30, FIG. 35A shows a state corresponding to FIGs. 36A and 36B shows a state corresponding to FIG. 36 It shows the corresponding state.
FIGs. 36A and 36B are schematic views each showing a fastening body according to a modified example of the braking device 4000 in FIG. 30, showing a state corresponding to each state shown in FIG. 34.
FIG. 37 is a schematic view showing a fastening body according to another modification of the braking device 4000 in FIG. 30, showing a state corresponding to each state shown in FIG. 34.
FIG. 38A and 38B are views showing members used in a motion converting portion according to the fourth embodiment of the present invention, in which FIG. 38A shows a state in which a knurling 240 and a roller portion are connected by a plate 800, FIG. 38B And the knurled portion 240 and the roller portion 42 are connected by the string member 900.
FIG. 39 is a schematic view of a state in which the member of FIG. 38B sandwiches the code CD as seen from the direction of the arrow Z.
FIG. 40 is a view showing how the code CD is braked by the motion converting unit according to the fourth embodiment of the present invention, where FIG. 40A is a free movement state and FIG. 40B is a diagram showing a clamping state.
FIG. 41A and 41B are views showing how the code CD is braked by another motion converting unit according to the fifth embodiment of the present invention, wherein FIG. 41A shows a state of free movement, FIG. 41B shows a state of clipping.
FIG. FIG. 42 is a diagram for explaining a motion converting unit according to a sixth embodiment of the present invention, in which FIG. 42A is a free movement state and FIG. 42B is a clipping state.
Fig. 43 is a drawing showing a mounting position for the braking devices of the embodiments of the present invention.

### DESCRIPTION OF EMBODIMENTS

Now, preferred embodiments of a braking device of the present invention and a sunlight shielding device using the braking device will be described in detail with reference to the drawings.

### 1.First embodiment

### <Braking device>

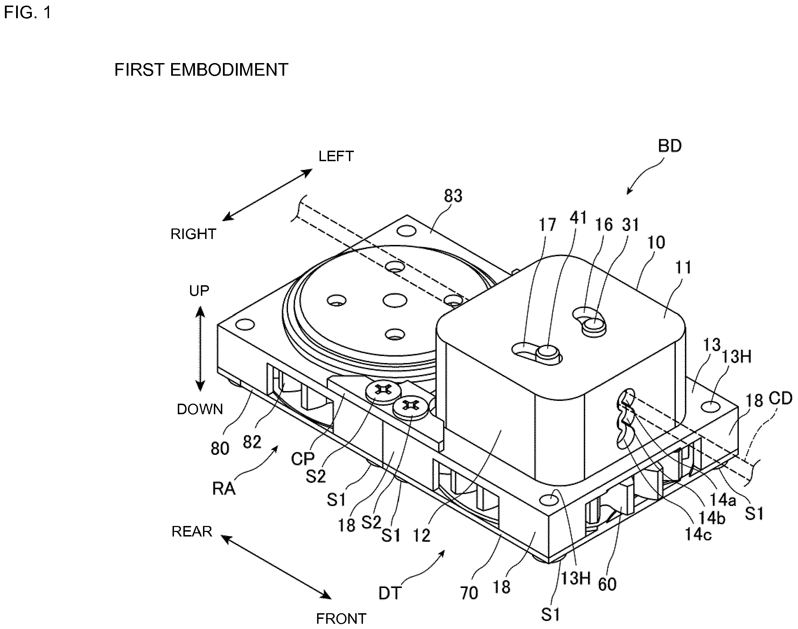

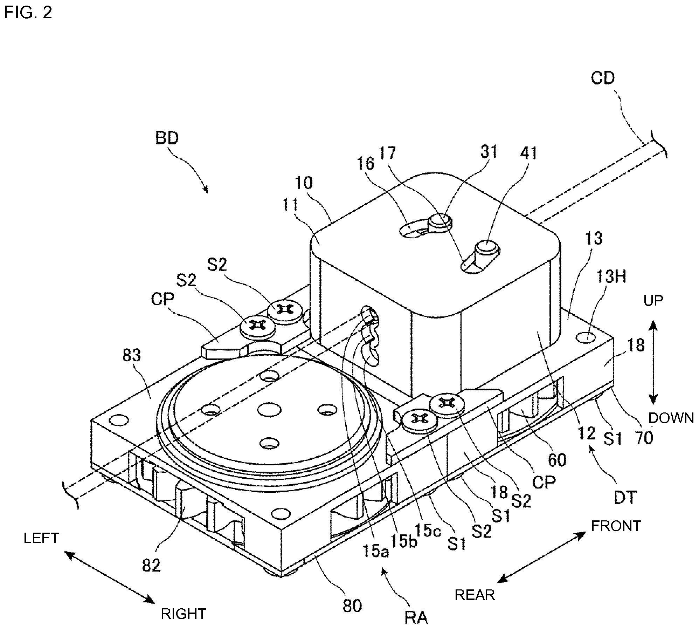

FIG. 1 is a perspective view showing a braking device according to a first embodiment of the present invention, and FIG. 2 is a view showing the braking device of FIG. 1 from another angle.As shown in FIG. 1 and FIG. 2, in the braking device BD of the present embodiment, the motion converting portion DT and the resistance applying portion RA are connected in the front-rear direction.As shown in FIG. 1, the direction from the resistance applying portion RA to the motion converting portion DT is defined as the front side, and the left-right direction (width direction) and the up-down direction are determined with reference to the front-rear direction. However, these directions are used for the sake of convenience in the present specification, and do not mean that the use state of the braking device is in these directions.

The motion converting unit DT includes a base 70 forming a part of the housing and a cover 10 fixed to the base 70 and forming another part of the housing.

The base 70 is a substantially flat plate member and has a substantially square outer shape.A screw hole is formed in a corner portion of the base 70.

The cover 10 has a roughly square top wall portion 11 whose outer shape is smaller than the base 70, a side wall portion 12 connected to the entire outer periphery of the top wall portion 11 and extending downward from the top wall portion 11, A flange portion 13 connected to the lower edge which is the opposite side to the top wall portion 11 side, and a fixing post 18 connected to the flange portion 13.

A plurality of guide holes 14 a - 14 c are formed in the front portion of the side wall portion 12.A plurality of guide holes 15 a to 15 c are formed in the rear portion of the side wall portion 12, and the plurality of guide holes 15 a to 15 c are opposed to the plurality of guide holes 14 a to 14 c in the front-rear direction.These guide holes 14 a to 14 c and the guide holes 15 a to 15 c are holes through which the cord CD is inserted in the front-rear direction, and the cord CD may be passed through the guide hole 14 a and the guide hole 15 a, and the guide hole 14 b And the guide hole 15 b, and the code CD may be passed through the guide hole 14 c and the guide hole 15 c.Further, the code CD may be inserted into each of two or more combinations of the guide holes.In FIGS. 1 and 2, the code CD indicated by a broken line is inserted through the guide hole 14a and the guide hole 15a.

In the top wall portion 11, a first top wall groove 16 and a second top wall groove 17 are formed. In the present embodiment, the first top wall groove 16 and the second top wall groove 17 are formed in a groove shape Thereby forming an opening.The first top wall groove 16 and the second top wall groove 17 are each formed obliquely with respect to the longitudinal direction of the code CD, that is, the front-back direction, and as the head CD, which is the longitudinal direction of one of the cords CD, The distance between the top wall groove 16 and the second top wall groove 17 is made small.In addition, the first top wall groove 16 is formed in a circular arc shape, and the second top wall groove 17 is formed in a linear shape.The shape of the second top wall groove 17 is not limited to a straight shape and may be a curved shape.Further, they may have substantially the same shape as the first top wall groove 16 and may be provided so as to curve in the same direction.

The flange portion 13 is a portion extending from the side wall portion 12 to the outer periphery side, and the shape and size of the outer periphery substantially coincides with the shape and size of the outer periphery of the base 70 of the cover 10.In each corner portion of the flange portion 13, a screw hole 13 </ b> H is formed.

Further, a fixing post 18 is connected to each corner portion of the flange portion 13.A threaded hole (not shown) is formed in the fixing post 18 in the vertical direction, and the threaded hole penetrates through a threaded hole 13 </ b> H formed in the flange portion 13.As shown in FIGS. 1 and 2, the fixing screw S 1 is screwed to the fixing support column 18 via the base, and the cover 10 is fixed on the base 70.

In addition, the motion converting portion DT and the resistance applying portion RA are fixed to each other by the coupling plate CP being fixed to the motion converting portion DT and the resistance applying portion RA by the coupling screw S2.

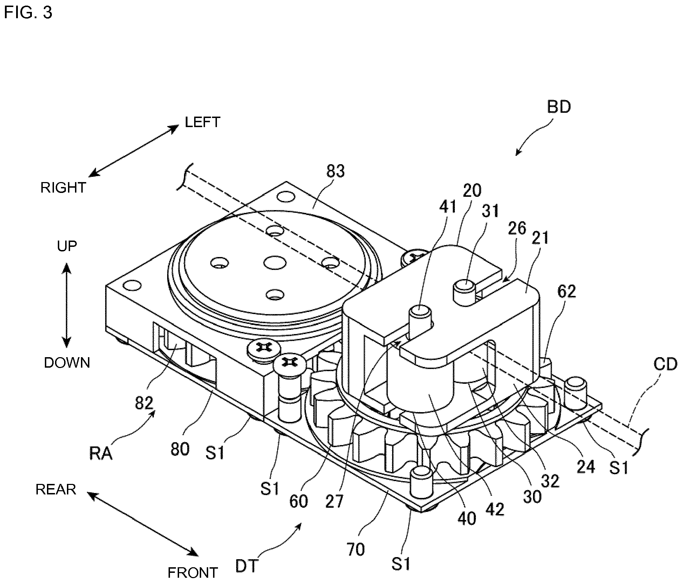

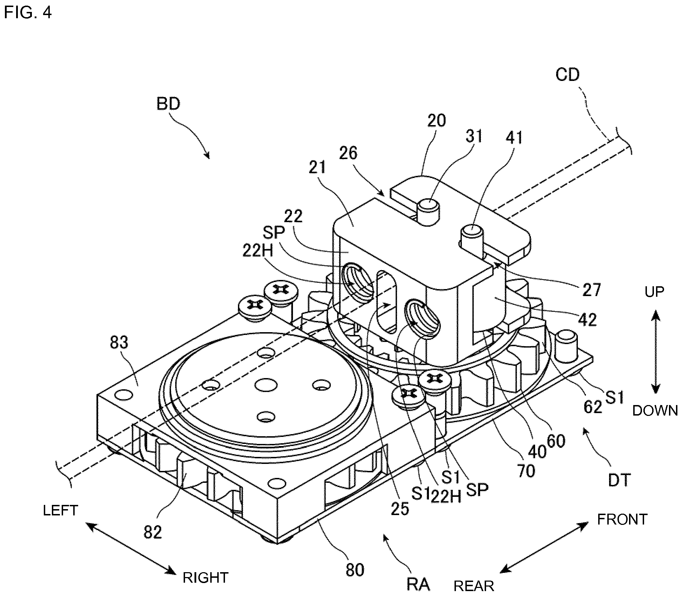

3 is a view showing a state in which the cover 10 shown in FIG. 1 is removed, and FIG. 4 is a view of FIG. 3 as seen from substantially the same viewpoint as FIG. 2. As shown in FIGS. 3 and 4, in the cover 10, a tension transmission roller 30, an idle roller 40 as a support pillar, a bracket 20 (also referred to as a slider 20) for holding the tension transmission roller 30 and the idle roller 40,Hereinafter referred to as the slider 20) are housed in the housing.

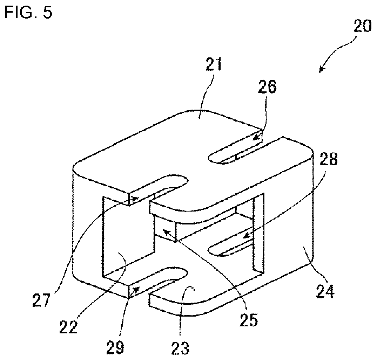

FIG. 5 is a perspective view showing the slider 20.As shown in FIGS. 3 to 5, the slider 20 includes a top wall portion 21, a back side wall portion 22 and a front side wall portion 24 connected to the top wall portion 21, a back side wall portion 22 and a front side wall portion 24 And a bottom wall portion 23 to be connected to the bottom wall portion 23.

The top wall portion 21 has a shape in which a pair of grooves are formed in a substantially rectangular shape.The pair of grooves are defined as a first top wall groove 26 and a second top wall groove 27, respectively.The first top wall groove 26 and the second top wall groove 27 are linear grooves extending along the width direction and are aligned on a straight line.

In the present embodiment, the bottom wall portion 23 has substantially the same shape as the top wall portion 21.As a matter of course, the bottom wall portion 23 and the top wall portion 21 may have different shapes.Accordingly, a pair of grooves are formed in the bottom wall portion 23 so as to be aligned linearly in the width direction, and these pair of grooves are defined as the first bottom wall groove 28 and the second bottom wall groove 29, respectively .The first bottom wall groove 28 faces the first top wall groove 26 in the vertical direction and the second bottom wall groove 29 faces the second top wall groove 27 in the vertical direction.At least one of the first top wall groove 26, the second top wall groove 27, the first bottom wall groove 28 and the second bottom wall groove 29 is not cut off to the side surface of the top wall portion 21 or the bottom wall portion 23 It may be a hole.In this case, the member is assembled so that the shaft core 31 or the shaft core 41 is inserted into the hole.

A through hole 25 is formed in the back side wall portion 22.The through hole 25 penetrates the back side wall portion 22 in the front-rear direction at substantially the center in the width direction of the back side wall portion 22.The shape of the hole is a substantially rectangular shape long in the vertical direction.As shown in FIG. 4, non-through holes 22 </ b> H formed from the outer surface of the back side wall portion 22 are formed on both sides of the through hole 25.The non-through hole 22 </ b> H has a substantially circular shape.It should be noted that the shape of the non-through hole 22H is not limited to this, and may be any shape as long as it is not dented when the coil spring SP is inserted.A coil spring SP is inserted in each non-through hole 22H, and one end of the coil spring SP protrudes from the non-through hole 22H.In FIG. 4, a portion protruding from the non-through hole 22H of the coil spring SP is omitted.

The width of the front side wall portion 24 is less than half the width of the top wall portion 21 and the back side wall portion 22.Accordingly, the lateral region of the front side wall portion 24 sandwiched between the top wall portion 21 and the back side wall portion 22 of the slider 20 is largely opened.

The size in the width direction of the slider 20 having such a shape is substantially the same as the distance between the inner walls in the width direction of the cover 10 and the size in the front and rear direction of the slider 20 is the same as the distance between the inner walls in the front- It is made smaller than the distance.Therefore, when the slider 20 is disposed in the space of the cover 10, the side walls of the top wall portion 21 and the bottom wall portion 23 of the slider 20 come into contact with the inner wall surface in the width direction of the slider 20, and the slider 20 The movement in the width direction is restricted.In this state, the guide holes 14 a - 14 c and the guide holes 15 a - 15 c of the cover 10 and the through hole 25 are aligned in the front-rear direction.That is, the through hole 25 is a hole for inserting the code CD into the slider 20.On the other hand, in a state where the slider 20 is disposed in the space of the cover 10, a gap is generated in the front-rear direction between the slider 20 and the inner wall surface of the cover 10, and the slider 20 moves in the front-rear direction with respect to the cover 10 be able to.In a state where the slider 20 is disposed in the space of the cover 10, the coil spring SP protruding from the non-through hole 22 </ b> H of the back side wall portion 22 of the slider 20 presses the rear inner wall of the cover 10.Accordingly, in a state where the slider 20 is disposed in the space of the cover 10, the slider 20 is positioned on the front side and pressed against the inner wall on the side of the side wall portion 12 on which the guide holes 14 a - 14 c are formed .

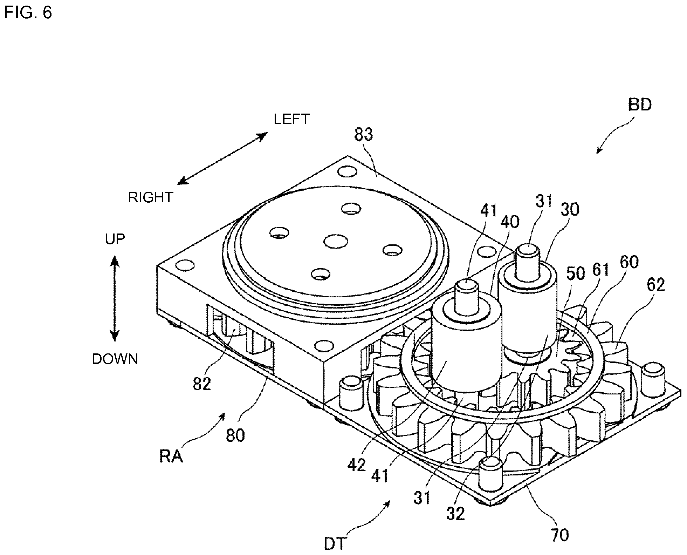

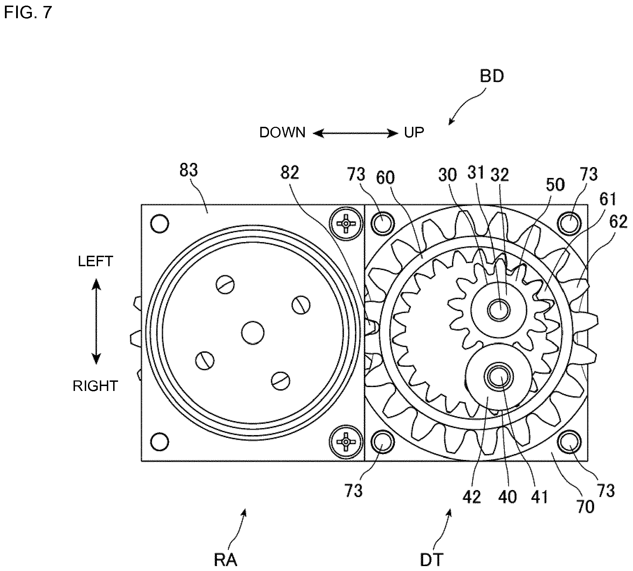

6 is a view showing a state where the slider 20 of FIG. 3 is removed, and FIG. 7 is a plan view of FIG.As shown in FIGS. 6 and 7, the tension transmission roller 30 has an axis 31 and a roller portion 32 that covers the outer peripheral surface of the shaft 31.The outer peripheral surface of the roller portion 32 is in a state where the friction coefficient is higher than the flat surface of the metal.In order to achieve such a state, for example, the outer peripheral surface of the roller portion 32 is formed of a material having a high friction coefficient such as rubber, or the outer peripheral surface of the roller portion 32 is knurled.Both end portions of the shaft core 31 are exposed from the roller portion 32.

The idle roller 40 has an axis 41 parallel to the axis 31 of the tension transmission roller 30 and a roller portion 42 covering the outer peripheral surface of the shaft core 41.Therefore, the rotation shaft of the tension transmission roller 30 and the rotation axis of the idle roller 40 are parallel to each other.The outer diameter of the roller portion 42 of the idle roller 40 is larger than the outer diameter of the roller portion 32 of the tension transmission roller 30.The outer peripheral surface of the roller portion 42 of the idle roller 40 is set to have a higher friction coefficient than the flat surface of the metal like the outer peripheral surface of the roller portion 32 of the tension transmission roller 30.Both end portions of the shaft core 41 are exposed from the roller portion 42.

As shown in FIGS. 3 and 4, the roller portion 32 of the tension transmission roller 30 and the roller portion 42 of the idle roller 40 are accommodated in the slider 20.That is, the roller portion 32 and the roller portion 42 are sandwiched between the top wall portion 21 and the bottom wall portion 23 of the slider 20.In this state, one end side of the shaft core 31 of the tension transmission roller 30 is fitted movably in the first top wall groove 26 of the slider 20 and projects upward from the top wall portion 21 of the slider 20, and the shaft core 31 The end side is movably fitted into the first bottom wall groove 28 of the slider 20 and projects downward from the bottom wall portion 23 of the slider 20.In the above state, one end side of the shaft core 41 of the idle roller 40 is fitted movably in the second top wall groove 27 of the slider 20 and projects upward from the top wall portion 21 of the slider 20, and the The other end side is movably fitted into the second bottom wall groove 29 of the slider 20 and projects downward from the bottom wall portion 23 of the slider 20.As described above, since the first top wall groove 26, the second top wall groove 27, the first bottom wall groove 28, and the second bottom wall groove 29 extend linearly in the width direction, the first top wall groove 26 and the first bottom wall groove 28 movably fitting the shaft core 31 can move in the width direction with respect to the slider 20 and similarly the second top wall groove 27 and the second bottom wall The idle roller 40 in which the shaft center 41 is movably fitted in the groove 29 can move in the width direction with respect to the slider 20.

Although not specifically shown in the drawing, between the roller portion 32 of the tension transmission roller 30 and the top wall portion 21 and the bottom wall portion 23, between the roller portion 42 of the idle roller 40 and the top wall portion 21 and the bottom wall portion 23 , A police lider or the like for reducing friction may be interposed.

When the slider 20 is accommodated in the space of the cover 10 in the state where the roller portion 32 of the tension transmission roller 30 and the roller portion 42 of the idle roller 40 are accommodated in the slider 20 as described above, As shown in FIGS. 1 and 2, one end of the shaft center 31 of the tension transmission roller 30 is movably fitted into the first top wall groove 16 formed in the top wall portion 11 of the cover 10, and the idle roller 40 One end of the shaft core 41 is movably fitted into the second top wall groove 17 formed in the top wall portion 11 of the cover 10.

As shown in FIGS. 6 and 7, a pinion gear 50 is fixed to the other end side of the shaft core 31 of the tension transmission roller 30.The fixing is performed by press fitting or the like.Accordingly, the pinion gear 50 rotates together with the tension transmission roller 30 around the rotation axis of the tension transmission roller 30.Further, the pinion gear 50 and the tension transmission roller 30 are spaced apart from each other to such an extent that the bottom wall portion 23 of the slider 20 can be interposed, and as described above, the roller portion 32 of the tension transmission roller 30 is accommodated in the slider 20 , The pinion gear 50 is positioned outside the slider 20.Although not specifically shown, a police rider or the like for reducing friction may be interposed between the pinion gear 50 and the bottom wall portion 23 of the slider 20.

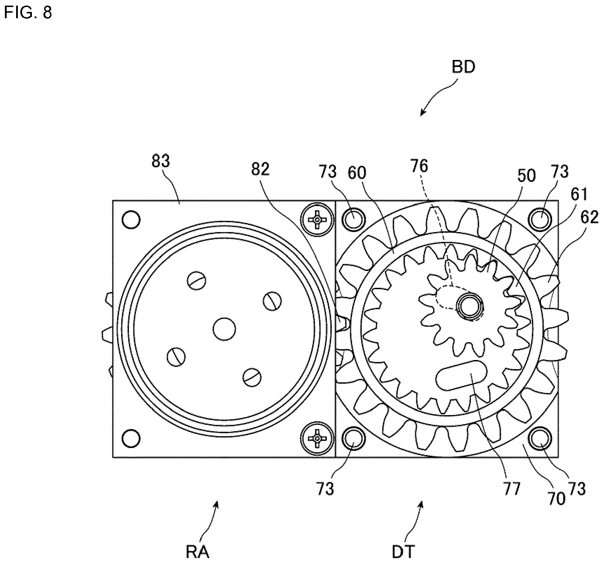

FIG. 8 is a plan view showing a state in which the tension transmission roller 30 and the idle roller 40 are removed from the state of FIG. 7. As shown in FIG. 8, a first base groove 76 and a second base groove 77 are formed in the base 70. In the present embodiment, both the first base groove 76 and the second base groove 77 are groove-shaped Thereby forming an opening.The first base groove 76 opposes the first top wall groove 16 formed in the top wall portion 11 of the cover 10 and has the same shape as the first top wall groove 16, and the second base groove 77 has the same shape as the first top wall groove 16 formed in the top wall portion 11 of the cover 10 Opposes the second top wall groove 17 formed in the wall portion 11 and has the same shape as the second top wall groove 17.

A ring gear 60 is disposed on the base 70.A circular groove (not shown) is formed in the base 70, and the ring gear 60 is rotatable along the circular groove.Therefore, the ring gear 60 is prevented from moving in the front-back direction and the width direction.When plan view of the ring gear 60, the inner circumferential surface of the ring gear 60 is covered with the first top wall groove 16 formed in the top wall portion 11 of the cover 10 and the first base groove 76 formed in the base 70 Along.That is, when the ring gear 60 is viewed in a plan view, the centers of the circular arcs of the first top wall groove 16 and the first base groove 76 and the center of the inner peripheral surface of the ring gear 60 coincide with each other.An inner peripheral gear 61 is provided on the inner peripheral surface of the ring gear 60, and an outer peripheral gear 62 is provided on the outer peripheral surface of the ring gear 60.In other words, the inner peripheral surface is the reference circle of the inner peripheral gear 61.

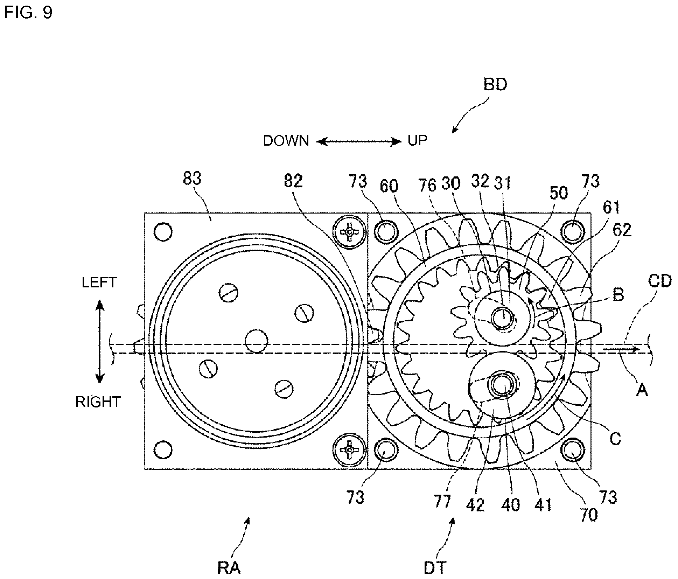

A screw hole 73 is formed in the corner portion of the base 70.As shown in FIGS. 1 and 2, a fixing screw S 1 is screwed into the screw hole 73, and the fixing screw S 1 is screwed into the fixing support column 18 of the cover 10 as described above, so that the cover 10 is fixed to the base 70.As described above, the slider 20 accommodating the roller portion 32 of the tension transmission roller 30 and the roller portion 42 of the idle roller 40 is accommodated in the cover 10, and when the cover 10 is fixed on the base 70, the pinion gear 50 The other end of the shaft center 31 of the tension transmission roller 30 is fitted into the first base groove 76 formed in the base 70 so as to be engaged with the inner peripheral gear 61 of the ring gear 60.Further, in this state, the other end of the shaft core 41 of the idle roller 40 is movably fitted into the second base groove 77 formed in the base 70.Since the inner periphery of the ring gear 60 is along the first top wall groove 16 of the cover 10 and the first base groove 76 of the base 70 as described above, the axial center 31 of the tension transmission roller 30 is located on the first heaven The engagement between the pinion gear 50 and the inner peripheral gear 61 of the ring gear 60 is maintained even when moving in the wall groove 16 and the first base groove 76.Here, the example in which the inner periphery of the ring gear 60 is along the first top-bottom wall groove 16 of the cover 10 and the first base groove 76 of the base 70 has been described, but the inner periphery of the ring gear 60 may be the first top- 16 and the first base groove 76 do not have to extend along the entire range.For example, in FIG. 9 to be described later, the inner circumference of the ring gear 60 is formed so as to engage with the first top wall groove 16 and the second top wall groove 16 so that the pinion gear 50 meshes with the ring gear 60 at least when the tension transmission roller 30 and the idle roller 40 come close to each other And may be along a part of at least the front portion of the first base groove 76 of the base 70.

The resistance applying portion RA is connected to the motion converting portion DT by the connecting plate CP as described above.The resistance applying portion RA includes a base 80, a top plate 83, and a gear 82 disposed between the base 80 and the top plate 83.Further, in the resistance applying portion RA, a torque applying portion (not shown) is provided between the base 80 and the top plate 83, and a rotational resistance is imparted to the gear 82 from the torque applying portion.For example, the resistance application section RA is configured to constantly impart rotational resistance to the gear 82, and is, for example, a rotary damper.As a constitution of the rotary damper, a viscous oil is sealed in a region surrounded by the outer periphery of the gear 82, and a configuration in which a rotational resistance is imparted to the gear 82 by the shear resistance of the viscous oil when the gear 82 rotates is cited You can do.Further, for example, the resistance application unit RA is configured to be given a rotational resistance when the rotation speed of the gear 82 is equal to or higher than a predetermined value, and is, for example, a centrifugal brake.As a centrifugal brake, a brake shoe rotating together with the gear 82 is provided in the outer periphery of the gear 82 so as to be movable in the radial direction, and when the gear 82 rotates at a speed equal to or higher than a predetermined speed, the brake shoe moves to the outer peripheral side by centrifugal force And the rotational resistance is imparted to the brake shoe and other members by frictional force or the like.

Further, the gear 82 and the outer peripheral gear 62 of the ring gear 60 mesh with each other in a state where the resistance applying portion RA and the motion converting portion DT are connected.Therefore, when the ring gear 60 rotates, the gear 82 of the resistance applying portion RA rotates, so that the rotational resistance is applied from the gear 82 to the ring gear 60.

### <Operation of Braking Device BD>

Next, the operation of the braking device BD will be described.

First, let's state that no tension is given to the code CD.As described above, the coil spring SP presses the rear inner wall of the cover 10 and the slider 20, and urges the slider 20 forward with respect to the cover 10.Therefore, the slider 20 is positioned in front of the inside of the cover 10.When the slider 20 is positioned in front of the cover 10, the tension transmitting roller 30 and the idle roller 40 are positioned in front of the cover 10 together with the slider 20.As described above, the distance between the first top wall groove 16 and the second top wall groove 17 decreases toward the front, and the first base groove 76 and the second base groove 77 form a first top wall groove 16 Like the second top wall groove 17, the distance decreases toward the front.Therefore, the slider 20 is positioned in front of the cover 10, whereby the tension transmission roller 30 in which the shaft center 31 is fitted in the first top wall groove 16 and the first base groove 76, the tension transmission roller 30 in which the shaft center 41 is in the second ceiling The distance between the wall groove 17 and the idle roller 40 fitted in the second base groove 77 also decreases.In other words, the first top wall groove 16 and the first base groove 76 can be understood as a restricting groove that restricts the movement of the tension transmission roller 30 such that the shaft center 31 of the tension transmission roller 30 is movably fitted and does not follow the groove of the tension transmission roller 30, It can be understood that the second top wall groove 17 and the second base groove 77 are restriction grooves that restrict the movement of the idle roller 40 in which the shaft center 41 of the idle roller 40 is movably fitted and does not follow the groove of the idle roller 40.In addition, since the first top wall groove 16 and the first base groove 76 are concentrically formed with the inner peripheral surface of the ring gear 60 in a plan view, even if the shaft core 31 moves in the respective grooves, the pinion The gear 50 can continue to mesh with the inner peripheral gear 61 of the ring gear 60.

When the distance between the tension transmission roller 30 and the idle roller 40 becomes small as described above, the tension transmission roller 30 is pressed by the idle roller 40, and the tension transmission roller 30 and the roller portion 42 of the idle roller 40 are pressed by the code CD Is sandwiched.That is, in the present embodiment, the coil spring SP can be understood as an urging member that constantly urges the tension transmission roller 30 so that the tension transmission roller 30 is pressed against the idle roller 40.The tension transmission roller 30 and the idle roller 40 are separated from each other by the diameter of the cord CD in a state where the code CD is held between the tension transmission roller 30 and the idle roller 40.Therefore, due to the structures of the first top wall groove 16 and the second top wall groove 17, and the structures of the first base groove 76 and the second base groove 77, the slider 20 is positioned slightly rearward.

When the code CD is not clamped between the tension transmission roller 30 and the idle roller 40, a jig is inserted from the guide hole 14 of the cover 10 to separate the tension transmission roller 30 from the idle roller 40, 10 exposed from the first top wall groove 16 and the second top wall groove 17 and the first base groove 76 and the second base groove 77 of the base 70 against the force of the coil spring SP To move the tension transmission roller 30 and the idle roller 40 apart from each other or to insert the code CD from the guide holes 14a to 14c into the guide holes 15a to 15c.

FIG. 9 is a diagram showing the operation of the braking device BD.As described above, a tension is applied to the code CD from a state in which no tension is applied to the code CD, and the code CD is moved forward along the longitudinal direction as indicated by an arrow A in FIG. 9. That is, pull the code CD forward.Then, the tension transmission roller 30 and the idle roller 40 for holding the code CD are rotated by the pressing force of the coil spring SP.When the tension transmission roller 30 rotates, as shown by an arrow B in FIG. 9, the pinion gear 50 also rotates and the pinion gear 50 rotates in one rotation direction along the inner periphery of the ring gear 60 (the pinion gear 50 rotates The rotation direction opposite to the rotation direction).However, in a state where no tension is applied to the code CD, since the code CD is held between the tension transmission roller 30 and the idle roller 40, the movement amount of the pinion gear 50 is small.When the tension transmission roller 30 moves, the tension transmission roller 30, the idle roller 40, and the tension transmission roller 30 are moved by the structure of the first top wall groove 16 and the second top wall groove 17 and the structures of the first base groove 76 and the second base groove 77 Come closer to each other and more firmly hold the cord CD.At this time, when the slider 20 moves slightly forward as a result of the tension transmission roller 30 slightly moving forward, the idle roller 40 moves along the second top wall groove 17 and the second base groove 77, And moves to the tension transmission roller 30 side.

When the tension transmission roller 30 and the idle roller 40 come close to the limit, although the tension transmission roller 30 continues to rotate, the position of the tension transmission roller 30 remains unchanged.Therefore, the ring gear 60 rotates in the direction of the arrow C by the rotation of the pinion gear 50 in the arrow B direction.When the rotation resistance is always applied to the gear 82 of the resistance imparting portion RA as described above, when the ring gear 60 rotates, the ring gear 60 is imparted with rotational resistance from the resistance applying portion RA, and from the ring gear 60 A rotational resistance is imparted to the pinion gear 50.In the case where the rotation resistance of the gear 82 of the resistance application portion RA is equal to or greater than the predetermined value as described above, even if the ring gear 60 starts to rotate, the ring gear 60 The rotation resistance is not imparted to the gear 82. However, when the tension transmission roller 30 rotates quickly due to the fast movement of the code CD and the rotation speed of the ring gear 60 becomes a predetermined value or more, the rotation resistance is imparted to the gear 82.As a result, the rotational resistance is imparted to the ring gear 60, and rotational resistance is imparted from the ring gear 60 to the pinion gear 50.Thus, in either case, rotational resistance is also applied to the tension transmission roller 30.For this reason, a braking force is imparted to the code CD.

On the other hand, when pulling the cord CD toward the rear, the tension transmission roller 30 and the idle roller 40 rotate in the opposite rotation direction.Therefore, the pinion gear 50 also rotates in the rotational direction opposite to the direction of the arrow B.Therefore, the pinion gear 50 meshed with the inner peripheral gear 61 of the ring gear 60 moves along the other rotation direction along the inner periphery of the ring gear 60.Therefore, the tension transmission roller 30 and the idle roller 40 are separated from each other.Therefore, the braking force applied to the code CD is canceled, and the code CD can move freely.By the movement of the pinion gear 50 in the other rotation direction, the tension transmission roller 30 moves rearward, the slider 20 also moves rearward due to the rearward movement of the tension transmission roller 30, and the idle roller 40 also moves rearward .When the tension transmission roller 30 and the idle roller 40 move rearward as described above, due to the structures of the first top wall groove 16 and the second top wall groove 17 and the structures of the first base groove 76 and the second base groove 77, The tension transmission roller 30 and the idle roller 40 can be appropriately separated from each other.

As described above, the braking device BD of the present embodiment has the tension transmission roller 30 that nips the code CD between the idle roller 40 and the idle roller 40 and rotates by the movement of the code CD in the longitudinal direction , A pinion gear 50 that rotates together with the tension transmission roller 30 around the rotation axis of the tension transmission roller 30, a ring gear 60 on which an inner peripheral gear 61 meshing with the pinion gear 50 is formed on the inner peripheral surface, a ring gear 60 , And the pinion gear 50 is movable along the inner peripheral surface of the ring gear 60. The tension transmission roller 30 is arranged such that the pinion gear 50 is movable in the ring gear 60 And is pressed against the idle roller 40 when moving along one rotation direction of the circumferential surface.

Therefore, according to the braking device BD of the present embodiment, when the cord CD is pulled in one direction, the tension transmission roller 30 rotates together with the pinion gear 50 along the movement of the code CD and the ring gear 60 of the pinion gear 50 , The tension transmission roller 30 is pressed against the idle roller 40 by the movement in one rotation direction along the inner peripheral surface of the tension transmission roller 30.That is, when a tension is applied to the code CD and the code CD moves in one longitudinal direction, the code CD is firmly held between the idle roller 40 and the tension transmission roller 30 by the force of its own tension.Therefore, when the code CD is drawn in one longitudinal direction, the code CD is clamped with a stronger force than in the case where the code CD is not drawn.Therefore, slipping of the cord CD with respect to the tension transmission roller 30 is suppressed.When the code CD is pulled further, the ring gear 60 meshed with the pinion gear 50 and the inner peripheral gear 61 rotates, and the rotational resistance applied from the resistance application portion RA to the ring gear 60 is transmitted to the tension transmission roller 30 It transmits.In this manner, the cord CD is restrained from sliding relative to the tension transmission roller 30, and rotational resistance is imparted from the ring gear 60 to the tension transmission roller 30 via the pinion gear 50, so that the braking device BD , It is possible to appropriately apply the braking force to the code CD.

As described above, when the idle roller 40 moves to the tension transmission roller 30 side together with the movement along the one rotation direction of the inner peripheral surface of the ring gear 60 of the pinion gear 50, the movement of the tension transmission roller 30 It is possible to hold the code CD appropriately by reducing the amount.

In the braking device BD of the above embodiment, the coil spring SP is provided as an urging member that constantly urges the tension transmission roller 30 so that the tension transmission roller 30 is pressed against the idle roller 40.Therefore, even when the tension is not applied to the code CD, the code CD can be held between the tension transmission roller 30 and the idle roller 40.Therefore, even in the initial state of pulling the code CD, it is possible to suppress the sliding of the cord CD and the tension transmission roller 30, and to appropriately transmit the tension of the cord CD to the tension transmission roller 30.

In the braking device BD of the above embodiment, the ring gear 60 has an outer peripheral gear 62 formed on the outer peripheral surface thereof, and the outer peripheral gear 62 meshes with the gear 82 of the resistance applying portion RA.When the outer peripheral gear 62 meshes with a rotary damper or the like that imparts rotational resistance, the rotation resistance is always imparted to the ring gear 60 when the ring gear 60 rotates.In this case, it is possible to apply the braking force to the code CD at all times from the beginning of the drawing of the code CD.Further, by changing the rotary damper, it is possible to adjust the rotational resistance applied to the ring gear 60.When the outer gear 62 meshes with a centrifugal brake or the like to which rotational resistance is applied when the rotational speed is equal to or higher than a predetermined value, the ring gear 60 is engaged with the ring gear 60 Rotational resistance is imparted.Therefore, when the code CD is drawn at a predetermined moving speed although the braking force is not applied to the code CD at the start of pulling the code CD, the braking force can be applied to the code CD.In this case, by exchanging the centrifugal brake, it is possible to adjust the moving speed of the code CD to which the braking force is applied to the code CD and the rotational resistance applied to the ring gear 60.

As described above, the braking device BD according to the first embodiment is provided with a motion converting portion for converting movement of the cord into motion of another member, and is a braking device for braking movement of the cord, wherein the motion converting portion includes a cord , Wherein the clamping body sandwiches the cord when the cord and the clamping body move relative to each other in one direction, and when the cord and the clamping body move relative to each other in the other direction, the clamping body is non-It can be regarded as a braking device configured so that the clamping state changes so as to be released in a bent state.Here, in the first embodiment, the tension transmission roller 30 and the idle roller 40 constitute a clip.Further, the braking device BD is provided with a resistance imparting portion that generates resistance force as the cord moves relative to the cord in one direction.Further, the tension transmission roller 30 is provided at a position where it can come into contact with the cord and is movable within a predetermined range, and the idle roller 40 is positioned with the cord in between the tension transmission roller 30.Then, the tension transmission roller 30 moves to the first position when the cord and the tension transmission roller 30 relatively move in one direction, moves to the second position when the tension transmission roller 30 relatively moves in the other direction .Further, when the tension transmission roller 30 is positioned at the first position, the tension transmission roller 30 clamps the cord, and when the tension transmission roller 30 is positioned at the second position, the cord is released in a non-bent state .Here, releasing the code means a state allowing movement of the code, regardless of contact / non-contact between the cord and the clip.

Although the braking device BD of the present invention has been described with reference to the above embodiment as an example, the braking device of the present invention is not limited to the above embodiment.

For example, in the above embodiment, the idle roller 40 that is movably held and has a rotation axis parallel to the rotation axis of the tension transmission roller 30 is used as a support.However, the support column is not limited to the idle roller 40 as long as it holds the code CD between it and the tension transmission roller 30 and the code CD is movable.For example, the struts are configured to have a slippery surface and do not need to rotate.For example, it may be a support made of a metal whose surface is smoothly processed. However, In the case where the idle roller 40 is used as in the above embodiment, even when the cord CD has irregularities, it is possible for the idle roller to overcome the irregularities due to the rotation of the idle roller 40 and that the irregularities are caught Which is preferable.Also, the struts may not move.Even in this case, by moving the tension transmission roller 30, it is possible to hold the code CD.

Further, in the above embodiment, the coil spring SP as the urging member for constantly urging the tension transmission roller 30 via the slider 20 is disposed so that the tension transmission roller 30 is pressed against the idle roller 40.However, the coil spring SP may directly energize the tension transmission roller 30, for example.Also, the urging member need not be the coil spring SP.Further, such an urging member may not be provided.However, in order to sandwich the cord CD between the tension transmission roller 30 and the idle roller 40 appropriately at the beginning of drawing of the code CD, the braking device BD is preferably provided with a biasing member.

Further, in the above embodiment, the outer gear 62 is formed on the outer peripheral surface of the ring gear 60, and the outer gear 62 is engaged with a rotary damper, a centrifugal brake, or the like that imparts rotational resistance.However, for example, a resistance imparting portion for imparting rotational resistance to the ring gear 60, such as a rotary damper or a centrifugal brake, is provided between the ring gear 60 and the base 70 or between the ring gear 60 and the cover 10 It is also good.That is, the resistance applying portion may be provided at a position overlapping with the ring gear 60.In this case, for example, the resistance applying portion may mesh with the inner peripheral gear 61 of the ring gear 60 to impart rotational resistance to the ring gear 60, and the outer peripheral gear 62 of the ring gear 60 may be eliminated.In the case where the resistance applying portion is provided at a position overlapping with the ring gear 60, the braking device BD can be reduced in size.In the case where the resistance applying portion is provided between the ring gear 60 and the cover 10, the resistance applying portion is provided at a position that does not inhibit the movement of the tension transmission roller 30 and the idle roller 40.That is, the resistance imparting portion can be arranged with the rotation axis oriented vertically, horizontally and obliquely in the head box.

In the above embodiment, the shaft center 31 of the tension transmission roller 30 is movably fitted in the first base groove 76 formed in the base 70 and the first top wall groove 16 formed in the cover 10, The pinion gear 50, which together with the tension transmission roller 30 and the rotation shaft, moves along the inner peripheral surface of the ring gear 60.However, the means for regulating the movement of the tension transmission roller 30 and the pinion gear 50 may have other configurations.

### <Solar radiation shielding device>

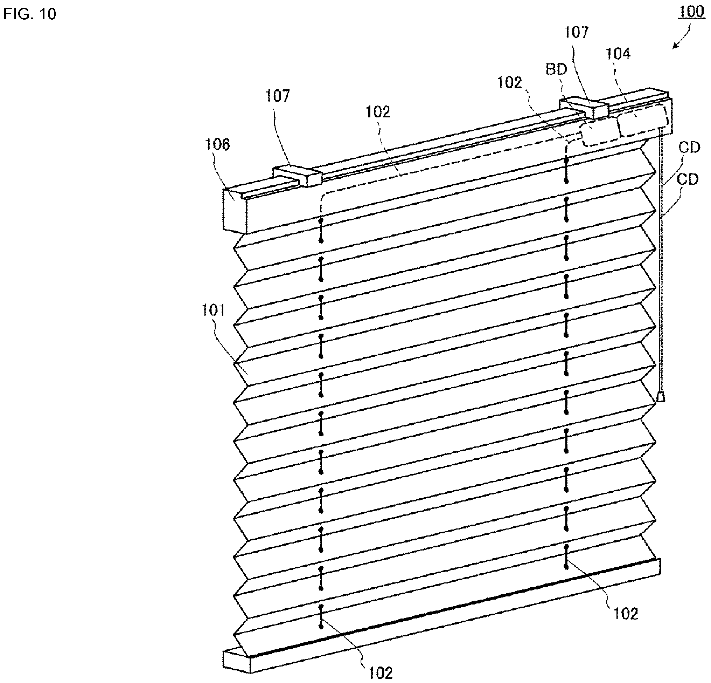

FIG. 10 is a view showing the solar radiation shielding device of this embodiment.As shown in FIG. 10, the solar radiation shielding apparatus 100 of this embodiment includes a solar radiation shielding member 101, a lift cord 102, a lock portion 104, a braking device BD, a cord CD, a housing 106, a fixing member 107 As main components.

The housing 106 has a substantially rectangular parallelepiped shape and is fixed to a wall or the like by a fixing member 107.Further, in the housing 106, a lock portion 104 and a braking device BD are disposed.The solar radiation shielding member 101 of the present embodiment is a fabric to which a folding habit is attached, and the upper end thereof is fixed inside the casing 106 so as to be suspended.One end of each of a pair of lift cords 102 is fixed to the lower end of the solar radiation shielding member 101.In addition, each lifting cord 102 is drawn into the housing 106.As each lifting cord 102 is pulled further into the housing 106, one end portion of each of the lifting cords 102 rises, the lower end of the solar radiation shielding member 101 rises, and the entire solar radiation shielding member 101 It rises while being folded.

As shown in FIG. 10, the code CD, which is an operation code, is connected to the respective lift cords 102 while being inserted through the lock portion 104 and the braking device BD.In the present embodiment, since there are two ascending / descending codes 102, the number of codes CD is two, one code CD is connected to one lift code 102, the other code CD is connected to the other lift code 102 .Since the code CD is two in this way, for example, one of the cords CD is inserted through the guide hole 14a and the guide hole 15a of the cover 10 of the brake device BD, and the other of the cords CD is inserted into the guide hole 15a of the brake device BD And is inserted through the guide hole 14 c and the guide hole 15 c in the cover 10.In addition, it is preferable that each code CD and the lift code 102 are connected without a knot or a seam.That is, it is preferable that one code CD and one lifting code 102 are composed of one code, and the other code CD and the other lifting code 102 are composed of one code.

The lock unit 104 moves or locks the code CD by the operation of the code CD.For example, when the pulling force in the vertical downward direction is relaxed in a state where the code CD is pulled in the vertical downward direction, the code CD is locked, and in a state in which the cord CD is pulled obliquely downward, the pulling force in the diagonally downward direction The code CD is not locked even if it is loosened.

In the casing 106, the braking device BD is disposed such that the front side as shown in FIG. 1 faces the lift cord 102 side and the rear side faces the lock part 104 side.Therefore, when the solar radiation shielding member 101 is completely lowered, that is, when the solar radiation shielding device 100 is closed, pulling the pair of cords CD downward causes the cord CD to be pulled backward as shown in FIG.At this time, the tension transmission roller 30 which holds the code CD between itself and the idle roller 40 rotates in the rotation direction opposite to the rotation direction indicated by the arrow B in FIG. 9 by the frictional force with the code CD.Therefore, the pinion gear 50 moves the inner periphery of the ring gear 60 to the other rotation direction side, and the tension transmission roller 30 and the idle roller 40 are separated.For this reason, it is possible to draw the code CD with a small resistance force.When the code CD is pulled, the respective elevator cords 102 connected to the code CD are drawn into the housing, and the solar radiation shielding member 101 is raised.

On the other hand, in a state where the solar radiation shielding member 101 is not fully lowered, the code CD is released with the locking unit 104 in a state where the code CD is not locked.Then, the solar radiation shielding member 101 descends by its own weight.Therefore, the lift cord 102 is pulled out from the casing 106.Accordingly, the code CD connected to the lift cord 102 is drawn toward the front of the braking device BD.Then, as described with reference to FIG. 9, a braking force is imparted to the code CD.Therefore, the descending speed of the solar radiation shielding member 101 can be suppressed.For this reason, it is possible to suppress breakage or the like due to excessive lowering speed of the solar radiation shielding member 101.

As described above, according to the solar radiation shielding apparatus 100 of the present embodiment, since the braking device BD appropriately applies the braking force to the longitudinal movement of the cord CD that allows the solar radiation shielding member 101 to move up and down , For example, even when the solar radiation shielding member 101 descends due to its own weight as described above, the descent speed of the solar radiation shielding member 101 can be suppressed.In addition, in the case where the resistance application portion RA is composed of a rotary damper or the like which always imparts rotational resistance to the ring gear 60 when the ring gear rotates, the descent speed of the solar radiation shielding member 101 can be suppressed from the beginning of the decrease.On the other hand, in the case where the resistance applying portion RA is composed of a centrifugal brake or the like for imparting rotational resistance to the ring gear 60 when the ring gear 60 is equal to or higher than the predetermined rotational speed, the descent speed is set at the beginning of descent of the solar radiation shielding member 101 And it is possible to suppress the descending speed when the descending speed is equal to or higher than the predetermined speed.

Further, by attaching the brake device BD in the direction opposite to the above, even if the cord CD is pulled strongly, it is possible to prevent the cord CD from moving vigorously and to prevent the solar radiation shielding member 101 from rising with excessive momentum Can be suppressed.Further, a plurality of mechanisms functioning as a brake may be provided.For example, a brake using two pinion gears 50 and a brake using a planetary gear may be used in combination.This makes it possible to brake more strongly against the movement of the code CD.

Although the solar radiation shielding apparatus 100 of the present invention has been described with reference to the above embodiment as an example, the solar radiation shielding apparatus of the present invention may have a different structure from the solar radiation shielding apparatus 100 of the above embodiment.The automatic operation may be a rising direction by a spring.For example, the solar radiation shielding device of the present invention may be a horizontal blind or a roll screen.In the case of a roll screen, although the elevator cord is not used, the motion of the operation cord can be braked by the present braking device.In a device which semi-automatically moves laterally with spring, weight, rail inclination or the like even with vertical type blinds, curtains, accordion curtains, pleat partitioning which operate horizontally, braking with the braking device to the driving cord which is interlocked during automatic operation You can do.

### <Action / Effect>

With the braking device BD according to the first embodiment, the following actions and effects can be obtained.
(1) Since the bending resistance is not bent (unbending) during free movement of the code CD, the bending resistance becomes small, and the code CD can move more smoothly.
(2) It is possible to reduce the operating force at the time of pulling operation and securely hold the cord CD at the time of automatic operation (automatic descent), thereby preventing unintentional falling.

### 2. Second Embodiment

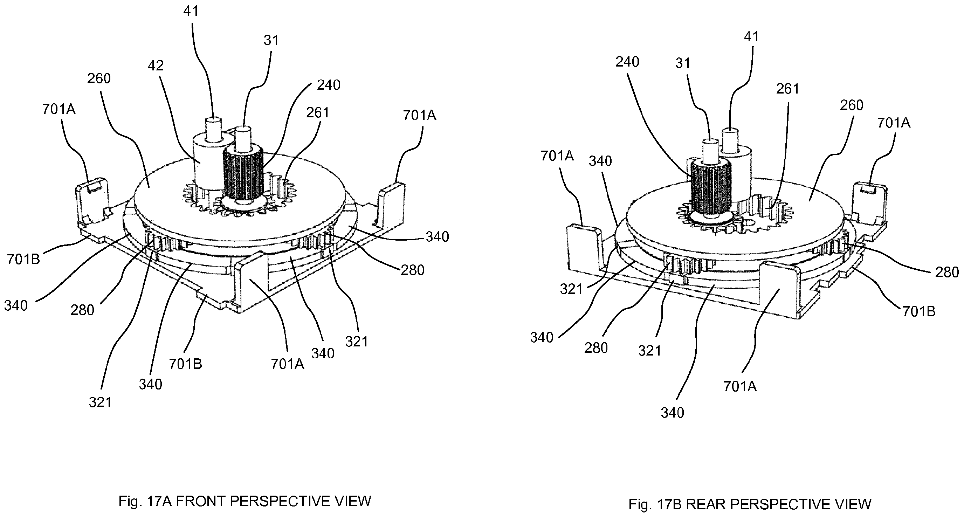

Next, referring to Figs. 17 to 29, a braking device 1000 of a second embodiment of the present invention will be described. While the braking device 1000 of the second embodiment is a braking device that brakes the movement of a cord, as with the brake BD of the first embodiment, there is a difference in configuration therebetween. Specifically, the difference is as follows: in the brake BD of the first embodiment, the movement converter DT and resistance provider RA are disposed on an approximately horizontal plane; in the braking device 1000 of the second embodiment, a mechanism corresponding to the movement converter DT and a mechanism corresponding to the resistance provider RA are disposed approximately vertically. In the second embodiment, a slider 220, a coil spring SP, an idle roller 40 including a shaft 41 and a roller 42, a knurled roller 240, a pinion gear 50, a shaft 31, a washer 241, an internal gear-provided carrier 260 correspond to the movement converter DT, and weights 340, a sun gear-provided weight holder 320 and a case 10A correspond to the resistance provider RA. Hereafter, the difference between the first and second embodiments will be mainly described. In the description, the same members as those in the first embodiment are given the same reference signs.

### 2-1 Overall Configuration

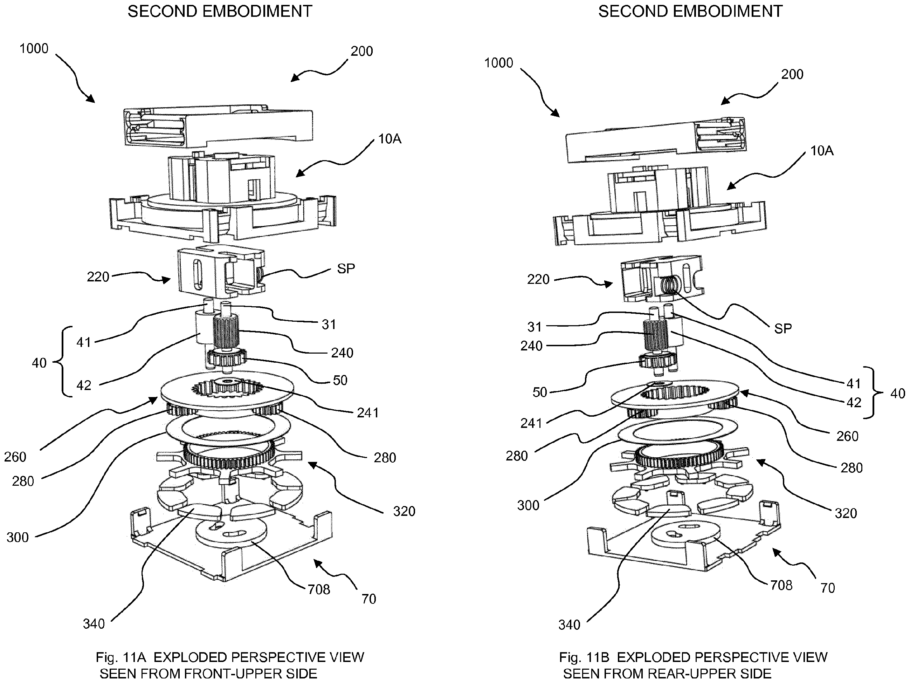

Figs. 11A to 12B are exploded perspective views of the braking device 1000 of the second embodiment. The braking device 1000 includes an arrangement member 200, the case 10A, the slider 220, the coil spring SP, the idle roller 40 including the shaft 41 and roller 42, the knurled roller 240, the pinion gear 50, a shaft 31 passed through the knurled roller 240 and pinion gear 50, the washer 241, the internal gear-provided carrier 260, planetary gears 280, a plate 300, the sun gear-provided weight holder 320, the weights 340, and a base 70.

In the second embodiment, the idle roller 40 and knurled roller 240 correspond to sandwiching object by which cords are sandwiched. Also, the idle roller 40 corresponds to the column, and the knurled roller 240 corresponds to the roller that rotates due to the movement of the cords in the length direction. The slider 220 corresponds to the slider 20 of the first embodiment.

As shown in Figs. 11A to 12B, in the second embodiment, the internal gear-provided carrier 260 is provided with four planetary gears 280, and eight weights 340 are held by the sun gear-provided weight holder 320. The respective members will be described below.

### 2-1-1 Arrangement Member 200

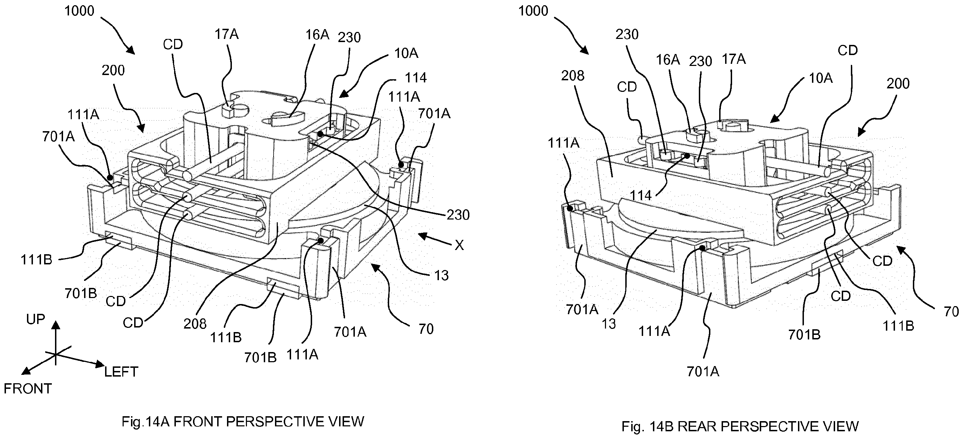

As shown in Fig. 14A and 14B, the arrangement member 200 has the cords CD passed therethrough and arranges the cords CD in the same direction. The arrangement member 200 can be formed of, for example, a resin. As shown in Fig. 14A, the directions of arrows are defined as the front-rear direction, left-right direction, and up-down direction. Specifically, the direction in which the distance between a first top wall groove 16 and a second top wall groove 17 is reduced is defined as the front direction, and then the left-right direction (width direction) and the up-down direction are defined.

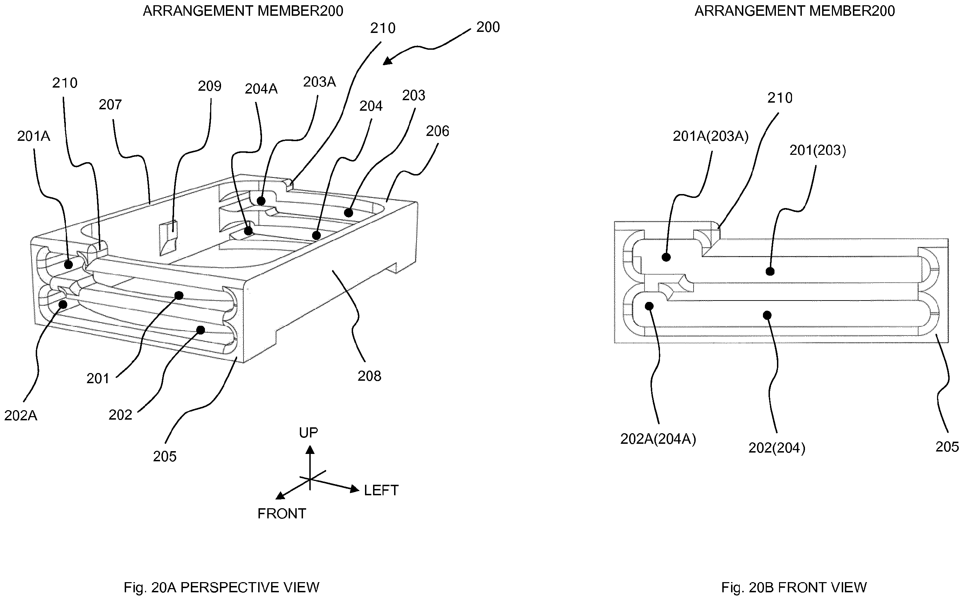

As shown in Fig. 20A, the arrangement member 200 includes a front wall 205, a right wall 207 and a left wall 208 connected to the front wall 205, and a rear wall 206 connected to the right wall 207 and left wall 208. The front wall 205, right wall 207, left wall 208, and rear wall 206 may have any shape and, in the second embodiment, are approximately rectangular. Also, in the second embodiment, the front wall 205 and rear wall 206 have approximately symmetrical shapes.

The front wall 205 has a first front groove 201, a first front cord insertion part 201A, a second front groove 202, and a second front cord insertion part 202A. The rear wall 206 has a first rear groove 203, a first rear cord insertion part 203A, a second rear groove 204, and a second rear cord insertion part 204A.

The first front cord insertion part 201A and second front cord insertion part 202A are parts through which the cords CD are inserted into the arrangement member 200 after assembling the braking device 1000. The first front cord insertion part 201A is formed so as to be wider than the first front groove 201. The second front cord insertion part 202A is formed so as to be wider than the second front groove 202. The cords CD can be inserted smoothly by first inserting the cords CD into the first front cord insertion part 201A and second front cord insertion part 202A and then sliding the cords CD toward the first front groove 201 and second front groove 202.

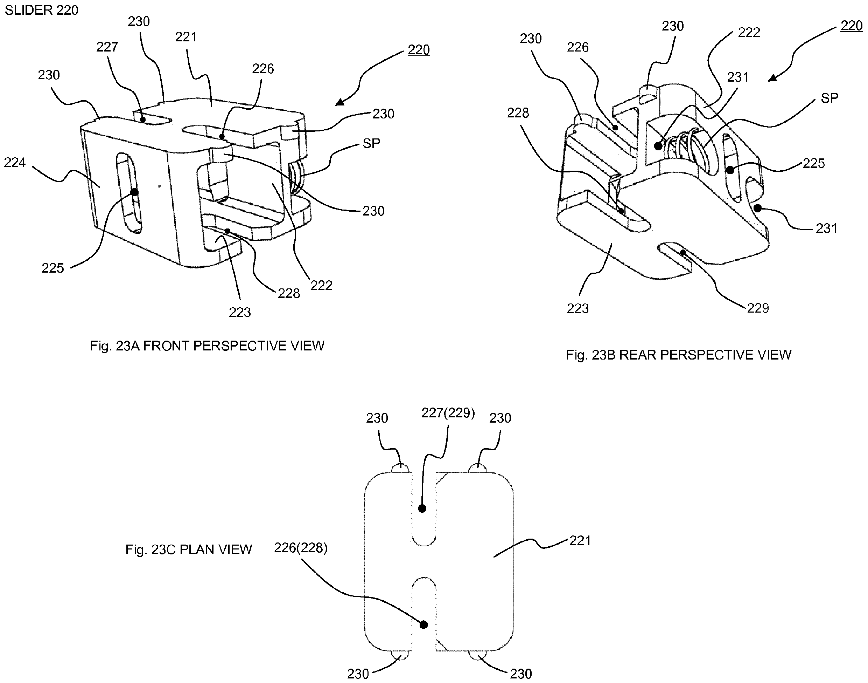

The first rear cord insertion part 203A and second rear cord insertion part 204A are parts of the rear wall 206 through which the cords CD inserted into the front wall 205 and passed through front and rear through holes 225 (see Fig. 23) of the slider 220 (to be discussed later) are drawn out of the arrangement member 200. The first rear cord insertion part 203A is formed so as to be wider than the first rear groove 203. The second rear cord insertion part 204A is formed so as to be wider than the second rear groove 204. The cords CD can be inserted smoothly by first inserting the cords CD into the first rear cord insertion part 203A and second rear cord insertion part 204A and then sliding the cords CD toward the first rear groove 203 and second rear groove 204.

The first front cord insertion part 201A, second front cord insertion part 202A, first rear cord insertion part 203A, and second rear cord insertion part 204A need not have shapes shown in Fig. 20 and may have any shape. For example, the first cord insertion part 201A may have an approximately circular shape, or may be shaped so that it is longitudinally long, then oblique, and then connected to the first front groove 201 from left to right (this also applies to the other grooves). Also, in the second embodiment, a step 210 is provided between the first front cord insertion part 201A and first front groove 201. However, the front wall 205 may be approximately rectangular without having the step 210 (this also applies to the rear wall 206).

As shown in Fig. 20B, in the second embodiment, the front wall 205 and rear wall 206 have approximately the same shape in front view. Accordingly, the cord CD inserted through the first front cord insertion part 201A is drawn out through the first rear cord insertion part 203A, and the cord CD inserted through the second front cord insertion part 202A is drawn out through the second rear cord insertion part 204A. In other words, the first front groove 201 and first front cord insertion part 201A and the first rear groove 203 and first rear cord insertion part 203A are a pair of corresponding grooves; the second front groove 202 and second front cord insertion part 202A and the second rear groove 204 and second rear cord insertion part 204A are a pair of corresponding grooves.

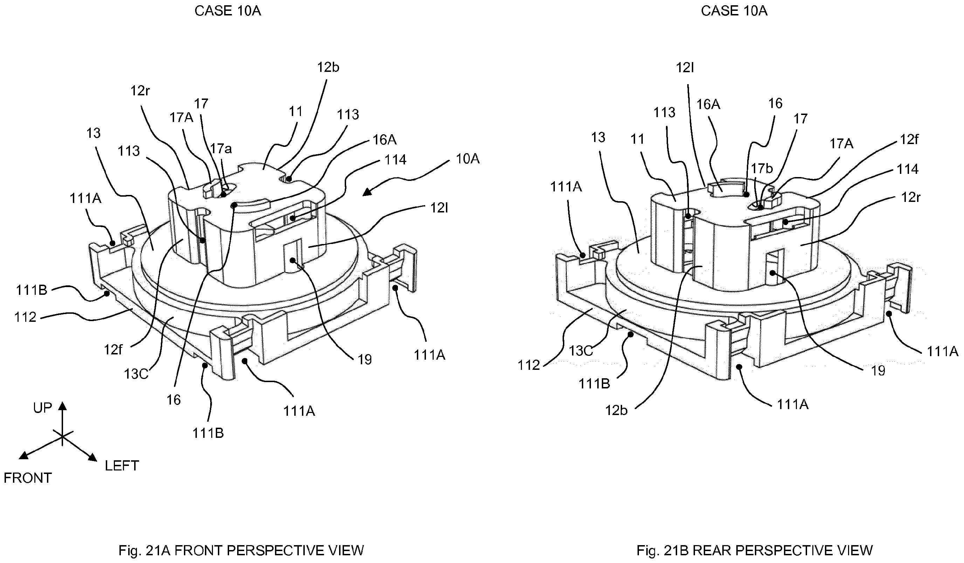

As shown in Fig. 20A, the right wall 207 of the arrangement member 200 is provided with a nail 209. The nail 209 becomes engaged with an engaging hole 19 (see Fig. 21) of the case 10A (to be discussed later) and fixes the arrangement member 200 to the case 10A when mounting the arrangement member 200 on the case 10A so as to cover the case 10A from above during the assembly of the braking device 1000. Although not shown in Fig. 20A, the inner surface of the left wall 208 is also provided with a similar nail 209 which is disposed so as to be opposed to the nail 209. The arrangement member 200 can be mounted on the case 10A by elastically engaging the two nails 209 of the arrangement member 200 with the two left and right engaging holes 19 of the case 10A while elastically deforming the right wall 207 and left wall 208 outward.

### 2-1-2 Case 10A

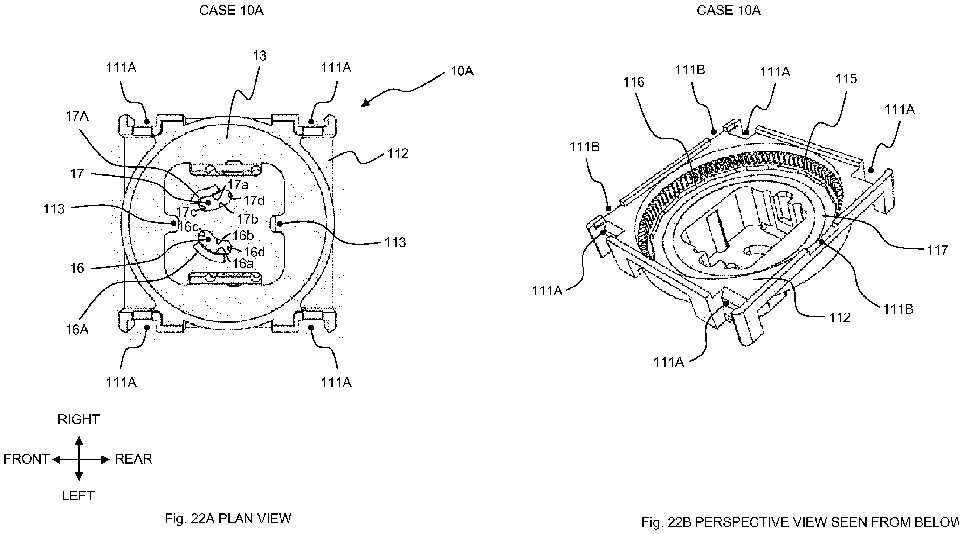

Next, the case 10A will be described with reference to Figs. 21A, 21B, and 22. Note that in Fig. 22, the left direction is referred to as the front; the right direction as the rear; the up direction as the right; and the down direction as the left. The case 10A forms a cabinet with the base 70 and holds within itself the slider 220, the coil spring SP, the idle roller 40 including the shaft 41 and roller 42, the knurled roller 240, the pinion gear 50, the shaft 31, the washer 241, the internal gear-provided carrier 260, the planetary gears 280, the plate 300, the sun gear-provided weight holder 320, and the weights 340.

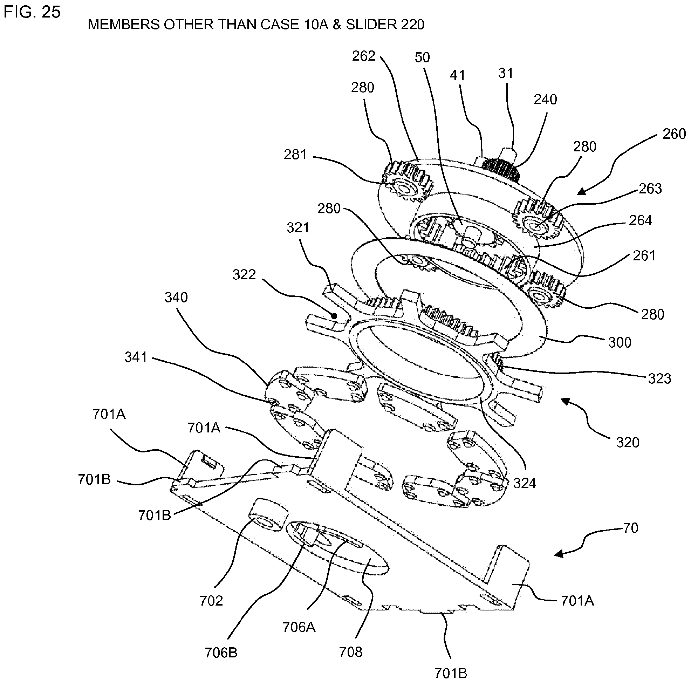

The case 10A forms the cabinet of the braking device 1000 with the base 70, for example, as shown in Fig. 25. The case 10A also forms a resistance provider RA with the sun gear-provided weight holder 320 and weights 340, for example, shown in Fig. 25.

As shown in Figs. 21A and 21B, the case 10A mainly includes a top wall 11 having an approximately square outer shape, a front side wall 12f, a right side wall 12r and a left side wall 121 connected to the front side wall 12f and top wall 11, a rear side wall 12b connected to the right side wall 12r and left side wall 121, a collar 13 opposed to the top wall 11 and extending radially from the right side wall 12r, rear side wall 12b, front side wall 12f and left side wall 121, a barrel 13C connected to the collar 13, and a cover 112 connected to the barrel 13C.

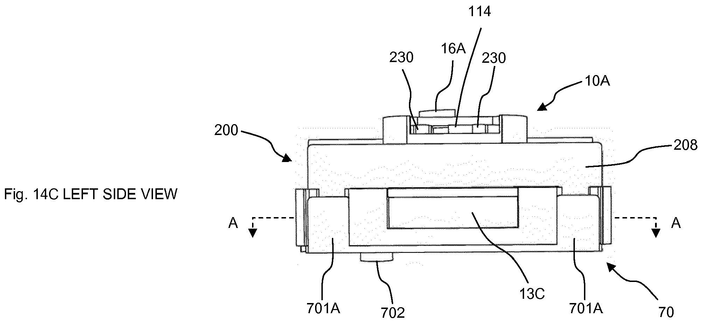

The front side wall 12f and rear side wall 12b have guide grooves 113. The two guide grooves 113 are opposed to each other in the front-rear direction. The guide grooves 113 are grooves through which the cords CD are inserted into the case 10A in the front-rear direction. Any number of cords CD may be inserted through the guide grooves 113. In the second embodiment, three cords CD are inserted longitudinally (see Fig. 14).

The right side wall 12r and left side wall 121 have the engaging holes 19. As described above, the engaging holes 19 are engaged with the nails 209 of the arrangement member 200 to fix the arrangement member 200 to the case 10A.

Provided above the left and right engaging holes 19 are support grooves 114. As shown in Fig. 14, the support grooves 114 support protrusions 230 of the slider 220 when the case 10A holds the slider 220 within itself. Thus, the slider 220 can be supported so as to be floating. Details will be described later.

The top wall 11 has a first top wall groove 16 and a second top wall groove 17. As shown in Fig. 22A, the first top wall groove 16 and second top wall groove 17 are formed so as to be inclined with respect to the length direction of the cords CD, that is, the front-rear direction. The distance between the first top wall groove 16 and second top wall groove 17 is reduced in the front direction, which is one length direction of the cords CD. The first top wall groove 16 has an arc shape, and the arc shape of the first top wall groove is formed so as to be concentric with the inner circumferential surface of the internal gear-provided carrier 260 shown in Fig. 17 in plan view. On the other hand, the second top wall groove 17 has a gently curved shape. Specifically, a front portion of the second top wall groove 17 is approximately linear, and more rear portions thereof are bent in the direction in which the second top wall groove 17 departs from the first top wall groove 16. The reason is as follows: the first top wall groove 16 has an arc shape such that it approaches the cords CD from the rear toward the front; accordingly, if the second top wall groove 17 is approximately linear, the shaft 31 and shaft 41 would be vertically displaced from the cords CD to different degrees when the shaft 31 and shaft 41 move along the first top wall groove 16 and second top wall groove 17, respectively; and the above shape of the second top wall groove 17 prevents such displacement. That is, if one groove is arc-shaped and the other is approximately linear, the vertical distance to the cords CD in the front-rear direction would vary between the shaft 31 and shaft 41. By causing the shafts 31, 41 to be vertically displaced from the cords CD to similar degree in this manner, the cords CD can be appropriately sandwiched between the knurled roller 240 and roller 42. Note that the second top wall groove 17 is not limited to this shape and may be, for example, a groove that has approximately the same shape as the first top wall groove 16 and is bent toward the cords CD. Thus, the shafts 31, 41 can be caused to be vertically displaced from the cords CD to approximately the same degree and thus the wear in the cords CD can be reduced. While, in the second embodiment, the shape shown in Fig. 22A is employed in order to cause the shafts 31, 41 to be vertically displaced from the cords CD to the same degree as much as possible, interactions or the like due to the movement or the like of other members are also considered in employing this shape.

As shown in Figs. 21A, 21B, and 22A, a first guide wall 16A protruding upward from the first top wall groove 16 is disposed on at least part of a position along the outer edge of the case 10A, of the first top wall groove 16 in plan view. In the second embodiment, the first guide wall 16A is disposed so as to form an angle of approximately 90° with the first top wall groove 16. The first guide wall 16A aims to reduce the surface pressure of the shaft 31 that moves along the first top wall groove 16. Specifically, by disposing the first guide wall 16A, the area that contacts the shaft 31 is increased and thus the surface pressure of the shaft 31 is reduced. More specifically, while tension is applied to the cords CD and the braking device 1000 is in operation, the surface pressure of the shaft 31 is being applied to the inner surface of the first top wall groove 16; if the inner surface of the first top wall groove 16 is shaved due to this surface pressure, the distance between the knurled roller 240 and roller 42 may vary and thus rotation may not be sufficiently transmitted to the knurled roller 240; and the disposition of the first guide wall 16A can prevent the case 10A from being shaved due to the pressure from the shaft 31. The thickness of the first guide wall 16A may be any thickness and is preferably appropriately designed considering the material of the case 10A, the moving speed of the shaft 31, or the like.

A second guide wall 17A protruding upward from the second top wall groove 17 is disposed on at least part of a position along an edge distant from the center of the case 10A in a position along the outer edge of the case 10A, of the second top wall groove 17 in plan view. In the second embodiment, the second guide wall 17A is disposed so as to form an angle of approximately 90° with the second top wall groove 17. The second guide wall 17A aims to reduce the surface pressure of the shaft 41 that moves along the second top wall groove 17. Specifically, by disposing the second guide wall 17A, the area that contacts the shaft 41 is increased and thus the surface pressure of the shaft 41 is reduced. More specifically, while tension is applied to the cords CD and the braking device 1000 is in operation, the surface pressure of the shaft 41 is being applied to the inner surface of the second top wall groove 17; if the inner surface of the second top wall groove 17is shaved due to this surface pressure, the distance between the knurled roller 240 and roller 42 may vary and thus rotation may not be sufficiently transmitted to the knurled roller 240; and the disposition of the second guide wall 17A can prevent the case 10A from being shaved due to the pressure from the shaft 41. The thickness of the second guide wall 17A may be any thickness and is preferably appropriately designed considering the material of the case 10A, the moving speed of the shaft 41, or the like.

Note that if the case 10A is formed of a strong material such as a metal, the first guide wall 16A or second guide wall 17A need not be disposed. This is because the case 10A is robust and therefore is hardly shaved due to the pressure from the shaft 31 and shaft 41.

The collar 13 is a member that is opposed to the top wall 11 and extends radially from the right side wall 12r, rear side wall 12b, front side wall 12f, and left side wall 12l. In the second embodiment, the collar 13 is approximately circular.

The barrel 13C is connected to the collar 13 and located outside an inner circumferential gear 115. In the second embodiment, the barrel 13C is approximately cylindrical.

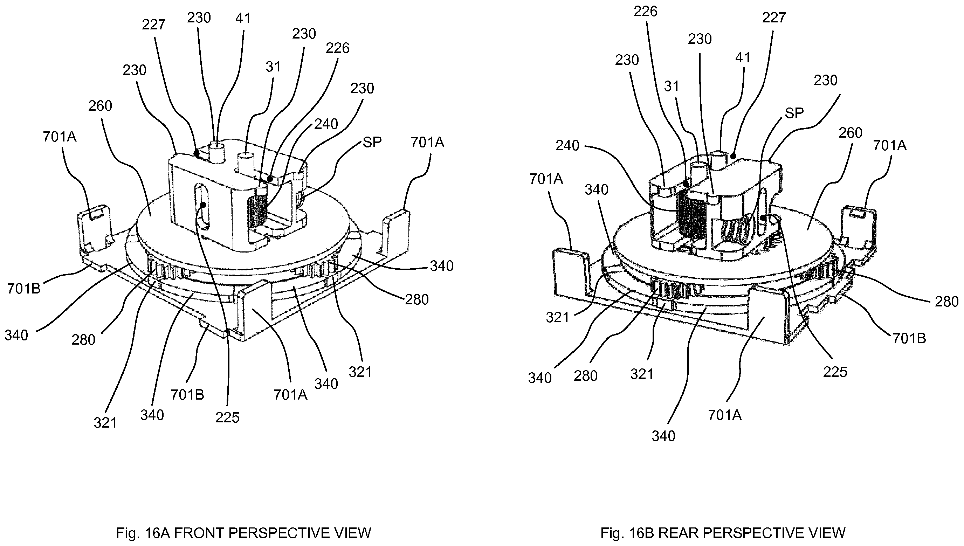

The cover 112 is a member that is connected to the barrel 13C and fitted into the base 70. In the second embodiment, the outer edge of the cover 112 is approximately square. The cover 112 has two first engaging grooves 111A in both edges of each of the left and right side surfaces thereof. The cover 112 also has two second engaging grooves 111B in both ends of the front edge thereof and has one second engaging groove 111B approximately in the center of the rear edge. The first engaging grooves 111A are engaged with first engaging plates 701A of the base 70 shown in Figs. 16A and 16B. The second engaging groove 111B is engaged with second engaging plates 701B of the base 70. Thus, the case 10A and base 70 are engaged with each other, forming the cabinet.

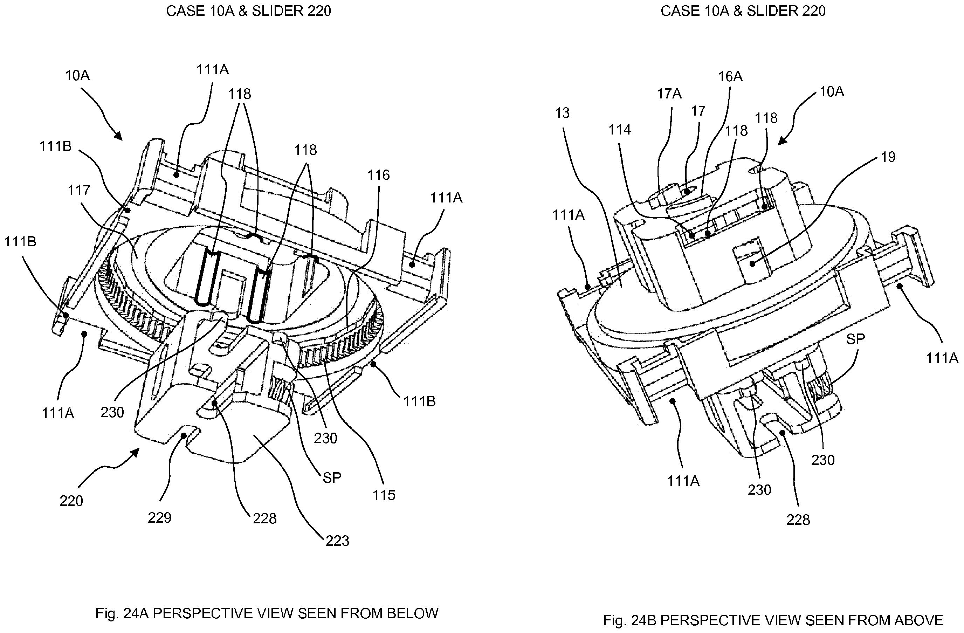

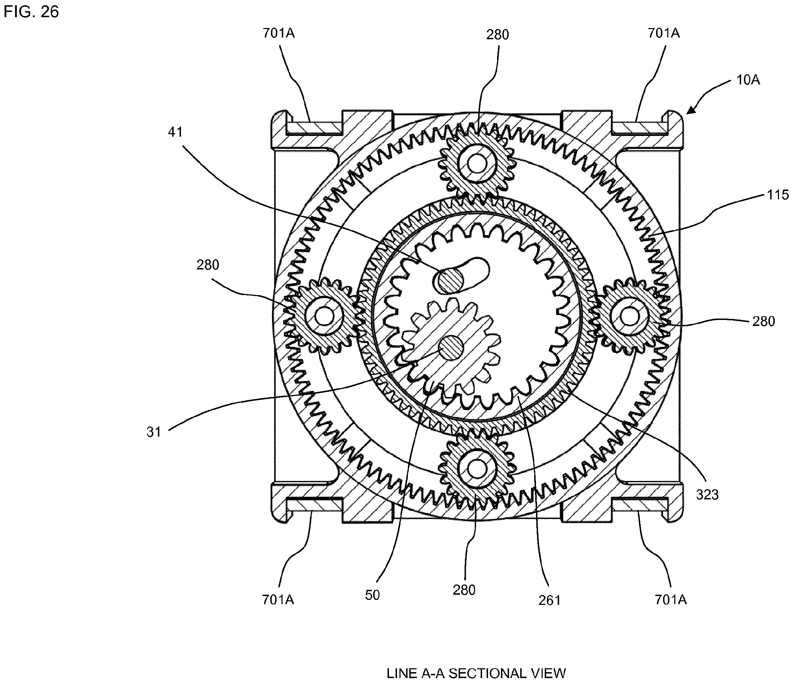

Next, the internal structure of the case 10A will be described with reference to Figs. 22B, 24A, and 24B. As shown in Fig. 26, the ring-shaped inner circumferential gear 115 engaged with the planetary gears 280 is formed in the case 10A. Formed above the inner circumferential gear 115 is a waveform part 116 that is approximately ring-shaped in plan view. In the waveform part 116, horizontally less distant portions and horizontally distant portions from the center of a circle passing through the center of the inner circumferential gear 115 are arranged alternately and form a zigzag shape in plan view. Specifically, the waveform part 116 is in the shape of a polygon obtained by connecting many straight lines. The inner surface of the collar 13 is provided with a step 117. The disposition of the waveform part 116 and step 117 can facilitate the positioning of other members, such as the internal gear-provided carrier 260, and reduce the friction resistance.

As shown in Figs. 24A and 24B, the left and right inner surfaces of the case 10A have four grooves 118. The grooves 118 are grooves through which the protrusions 230 of the slider 220 (to be discussed later) are passed during the assembly or disassembly of the braking device 1000. In the second embodiment, the slider 220 has four protrusions 230 and therefore the case 10A also has four grooves 118.

### 2-1-3 Slider 220

Next, referring to Fig. 23, the slider 220 will be described. The slider 220 serves as a movement member that holds the idle roller 40 and knurled roller 240 within itself and moves together with the idle roller 40 and knurled roller 240. The slider 220 includes a top wall 221, a rear side wall 222 and a front side wall 224 connected to the top wall 221, and a bottom wall 223 connected to the rear side wall 222 and front side wall 224.

The top wall 221 is approximately rectangular and has a first top wall groove 226 and a second top wall groove 227 forming a pair. The first top wall groove 226 and second top wall groove 227 are linear grooves extending along the left-right direction and aligned with each other.

The bottom wall 223 is opposed to the top wall 221. In the second embodiment, the bottom wall 223 has approximately the same shape as the top wall 221, but the top wall 221 and bottom wall 223 may have different shapes. The bottom wall 223 also have a first bottom wall groove 228 and a second bottom wall groove 229 that are aligned with each other in the left-right direction and form a pair. The first bottom wall groove 228 is opposed to the first top wall groove 226 in the up-down direction, and the second bottom wall groove 229 is opposed to the second top wall groove 227 in the up-down direction. Accordingly, as shown in Fig. 23C, the top and bottom grooves of the slider 220 appear to overlap each other in plan view.

The widths of the first top wall groove 226 and first bottom wall groove 228 are sizes within which the diameter of the shaft 31 falls. The widths of the second top wall groove 227 and second bottom wall groove 229 are sizes within which the diameter of the shaft 41 falls.

The four corners of the top wall 221 are provided with the protrusions 230 protruding in the left-right direction. As shown in Figs. 14A to 14C, the protrusions 230 are fitted in support grooves 114 of the case 10A and support the slider 220 in the case 10A in a floating state. In other words, the slider 220 is held so as to be in non-contact with the internal gear-provided carrier 260 located below.

The front side wall 224 and rear side wall 222 have through holes 225. The through holes 225 penetrate through the front side wall 224 and rear side wall 222 in approximate width-direction centers of the front side wall 224 and rear side wall 222 in the front-rear direction. The holes may have any shape, but must have shapes into which at least one cord CD can be inserted. Preferably, the holes have shapes into which longitudinally arranged multiple cords CD can be inserted. In the second embodiment, the holes have approximately oval shapes that are long in the up-down direction.

As shown in Fig. 23B, the rear side wall 222 has, on both sides of the through holes 225, recesses 231 formed from the outer side surfaces of the rear side wall 222. The recesses 231 may have any shapes and, for example, may have shapes obtained by notching the rear side wall 222 from the through hole 225 to the side surfaces, as shown in Fig. 23B, or the recesses 231 may be approximately circular or rectangular recesses or the like. In the second embodiment, the coil spring SP is disposed in the left recess 231, and one end of the coil spring SP protrudes from the recess 231. During the assembly of the braking device 1000, the coil spring SP contacts the inner wall of the case 10A and energizes the slider 220 in the front direction. Note that the portion protruding from the recess 231, of the coil spring SP is not shown in Fig. 23B. The coil spring SP may be disposed in the right recess 231, or coil springs SP may be disposed in the left and right recesses 231.

The size in the left-right direction, of the slider 220 thus shaped is approximately the same as the distance between the inner walls in the width direction, of the case 10A. The size in the front-rear direction, of the slider 220 is smaller than the distance between the inner walls in the front-rear direction, of the case 10A. Accordingly, when the slider 220 is disposed in the space of the case 10A, the side surfaces of the top wall 221 and bottom wall 223 of the slider 220 contact the inner walls in the width direction, of the case 10A, and the movement in the width direction, of the slider 220 is regulated by the case 10A. In this state, the guide grooves 113 of the case 10A and the through holes 225 of the slider 220 are arranged in the front-rear direction. That is, the through holes 225 are holes for inserting the cords CD into the slider 220. On the other hand, in a state in which the slider 220 is disposed in the space of the case 10A, there are gaps in the front-rear direction between the slider 220 and the inner walls of the case 10A. Thus, the slider 220 can move in the front-rear direction with respect to the case 10A. Also, in a state in which the slider 220 is disposed in the space of the case 10A, the coil spring SP protruding from the recess 231 of the rear side wall 222 of the slider 220 presses the rear inner wall of the case 10A. Thus, in a state in which the slider 220 is disposed in the space of the case 10A, the slider 220 is pressed forward and located on the front side in the case 10A.

Referring now to Figs. 24A and 24B, the protrusions 230 of the slider 220 will be described in detail. As shown in Figs. 24A and 24B, during the assembly of the braking device 1000, the slider 220 is located below the inside of the case 10A, and both are move relatively in the up-down direction so as to approach each other. Then, the protrusions 230 of the slider 220 are passed through the grooves 118 in the case 10A. Note that in Fig. 24A, the grooves 118 are emphasized to increase visibility. Then, as shown in Figs. 14A to 14c, the case 10A and slider 220 approach each other until the protrusions 230 reach the support grooves 114. Then, the coil spring SP on the slider 220 contacts the rear inner wall of the case 10A and energizes the slider 220 in the front direction. Thus, the protrusions 230 are located ahead of the grooves 118. Thus, once the slider 220 is mounted on the case 10A, the protrusions 230 can be prevented from being disengaged from the support grooves 114. Not only during the assembly of the braking device 1000 but also during the disassembly thereof, the grooves 118 allow the protrusions 230 to be passed therethrough. In this case, the slider 220 is moved back relative to the case 10A against the energizing force of the coil spring SP; and when the protrusions 230 reach the positions of the grooves 118, the slider 220 is moved down relative to the case 10A.

According to this configuration, the slider 220 can be supported in the case 10A so as to be floating. Thus, it is possible to prevent the slider 220 from contacting another component, for example, the internal gear-provided carrier 260 and thus to reduce or eliminate unnecessary resistance. As a result, the wear in the members can be reduced.

### 2-1-4 Idle Roller 40, Knurled roller 240, and Pinion Gear 50

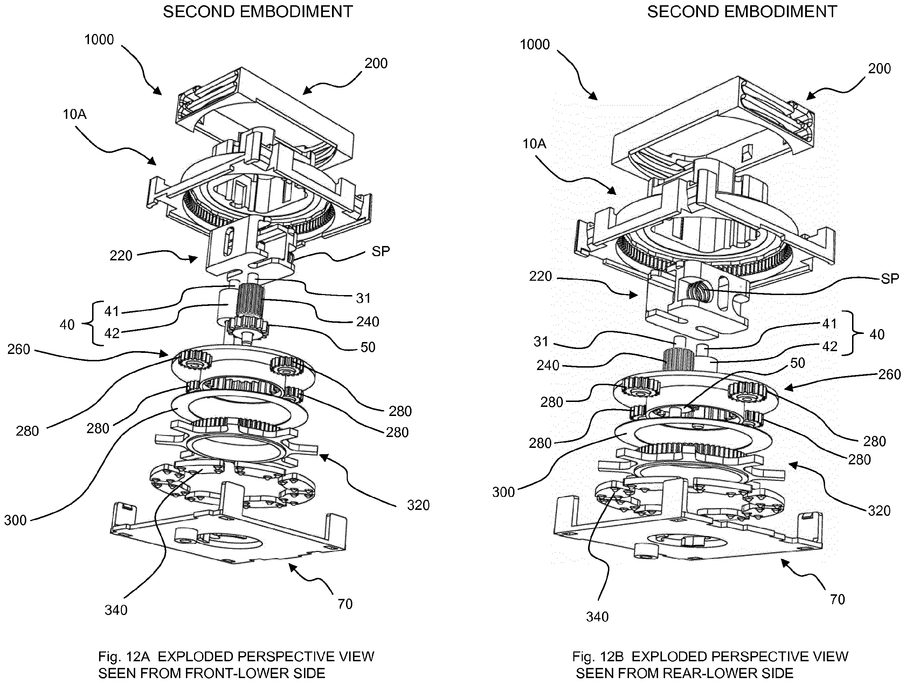

Next, Referring to Figs. 12A, 12B, and 25, the idle roller 40, knurled roller 240, and pinion gear 50 will be described. The idle roller 40 includes the roller 42 and shaft 41. The idle roller 40 has been described in detail in the first embodiment and therefore will not be described.

The knurled roller 240 corresponds to the roller 32 of the first embodiment. One end of the shaft 31 is inserted in the center of the knurled roller 240, and the other end thereof is inserted into the pinion gear 50. The knurled roller 240 may be formed of any material, for example, stainless steel.

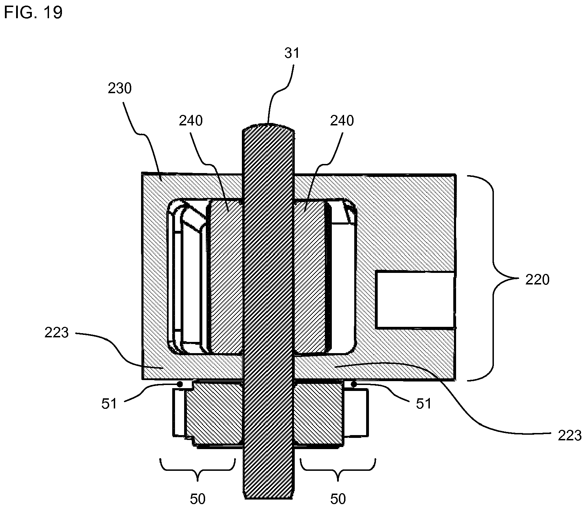

As in the first embodiment, the idle roller 40 and knurled roller 240 are held in the slider 220. The pinion gear 50 is held outside the slider 220. Referring now to Fig. 19, the positional relationship between the knurled roller 240, slider 220, and pinion gear 50 will be described. Fig. 19 is a part of a sectional view passing through an approximate center of the shaft 31 seen from the left side surface of the braking device 1000 of the second embodiment. As shown in Fig. 19, during the assembly of the braking device 1000, the bottom wall 223 of the slider 220 is sandwiched between the knurled roller 240 and pinion gear 50. In the second embodiment, a step 51 for reducing the contact area between the pinion gear 50 and slider 220 is formed in the pinion gear 50. Thus, when the knurled roller 240 and pinion gear 50 rotate integrally through the shaft 31, the sliding resistance between the pinion gear 50 and slider 220 can be reduced, allowing them to rotate smoothly. Note that in the second embodiment, the washer 241 (see Figs. 11A to 12B) is mounted on the shaft 31 below the pinion gear 50 to reduce the resistance.

### 2-1-5 Internal Gear-Provided Carrier 260 and Planetary Gears 280

Next, referring to Figs. 11A, 11B, and 25, the internal gear-provided carrier 260 and planetary gears 280 will be described. In the second embodiment, the internal gear-provided carrier 260 is approximately doughnut-shaped in plain view. The internal gear-provided carrier 260 includes a flange 262 protruding outward from a cylinder 264 in plain view.

The inner circumferential surface of the cylinder 264 is provided with an internal gear 261 engaged with the pinion gear 50. The internal gear 261 corresponds to the inner circumferential gear 61 of the first embodiment. The flange 262 is provided with support shafts 263 protruding downward in the vertical direction. Any number of support shafts 263 may be disposed, but the support shafts 263 are preferably disposed at equal intervals. In the second embodiment, four support shafts 263 are disposed.

The planetary gears 280 are rotatably supported by the support shafts 263. The planetary gears 280 are engaged with a sun gear 323 (to be discussed later) and the inner circumferential gear 115 disposed in the case 10A. The planetary gears 280 can revolve around the center of the internal gear 261. Accordingly, when the rotation of the pinion gear 50 is transmitted to the internal gear 261, the internal gear-provided carrier 260 rotates. This rotation causes rotation of the planetary gears 280 rotatably supported by the support shafts 263 on the flange 262 of the internal gear-provided carrier 260. Thus, the rotation caused by the pinion gear 50 can be speeded up. The planetary gears 280 are provided with steps 281. The steps allow the planetary gears 280 to avoid contacting other members.

### 2-1-6 Sun Gear-Provided Weight Holder 320 and Weights 340

Next, the sun gear-provided weight holder 320 and weights 340 will be described with reference to Figs. 11A, 11B, and 25. The sun gear-provided weight holder 320 includes a ring 324 and projections 321 and depressions 322 arranged outwardly alternately on the outside of the ring 324. As shown in Figs. 11A and 11B, the outer circumferential surface of the ring 324 is provided with the sun gear 323 that is engaged with the planetary gears 280 and whose rotation axis is directed in a direction approximately perpendicular to the extending direction of the projections 321. The weights 340 are disposed in the depressions 322. That is, the sun gear-provided weight holder 320 can be said to be a member that holds the weights 340 in the depressions 322 having the projections 321 as boundaries during the assembly of the braking device 1000. Any number of weights 340 may be provided, but the weights 340 are preferably disposed at equal intervals in terms of the balance during rotation. In the second embodiment, eight weights 340 are disposed and therefore eight projections 321 and eight depressions 322 are provided.

In the second embodiment, the weights 340 have protrusions 341 on sides thereof close to the base 70. The protrusions 341 can reduce the resistance caused when the weights 340 contact the base 70. Any number of protrusions 341 may be disposed. In the second embodiment, four protrusions 341 are disposed.

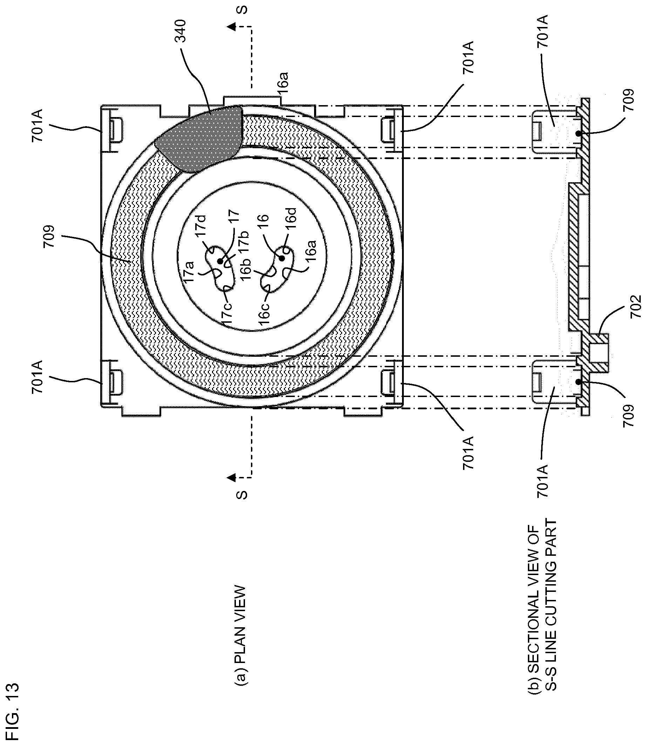

Instead of disposing the protrusions 341 on the weights 340, a groove may be formed in the base 70. Such a groove also can reduce the resistance between the weights 340 and base 70. For example, as shown in Fig. 13, a lower groove 709 (a ring-shaped, hatched portion in Fig. 13) than adjacent portions may be formed in the bottom of the base 70, and the weights 340 may be disposed thereon. The resistance 709, without providing the protrusions 341 on the weights 340, can reduce the contact area between the weights 340 and base 70 and thus can reduce the resistance between the weights 340 and base 70.

When the weights 340 rotate due to the rotation of the pinion gear 50, the weights 340 move in a direction in which the weights 340 departs from the center of the internal gear 261, by centrifugal force and then contact the inner circumferential wall of the case 10A. Thus, the weights 340 give resistance serving as a centrifugal brake to the rotation. As a result, the inner circumferential wall of the case 10A, the sun gear-provided weight holder 320, and the weights 340 can produce effects similar to those of the resistance provider RA of the first embodiment. That is, in the braking device 1000 of the second embodiment, the mechanism corresponding to the movement converter DT and the mechanism corresponding to the resistance provider RA are disposed approximately vertically.

During the assembly of the braking device 1000, the internal gear-provided carrier 260 and sun gear-provided weight holder 320 are assembled with the plate 300 therebetween. Specifically, the internal gear-provided carrier 260 and sun gear-provided weight holder 320 are assembled such that the cylinder 264 of the internal gear-provided carrier 260 is inserted into the ring 324 of the sun gear-provided weight holder 320. Accordingly, the diameter of the cylinder 264 is designed so as to be slightly smaller than the diameter of the ring 324.

The plate 300 has a function of preventing inclination of the planetary gears 28, as well as preventing the interference between the planetary gears 280 and weights 340. To reduce the thickness of the entire braking device 1000, the weights 340 are preferably formed so as to be as thin as possible. While the plate 300 is preferably formed of a metal to obtain a thin plate, it may be formed of a resin if technically possible. In this case, the plate 300 may be formed integrally with the sun gear 323.

### 2-1-7 Base 70

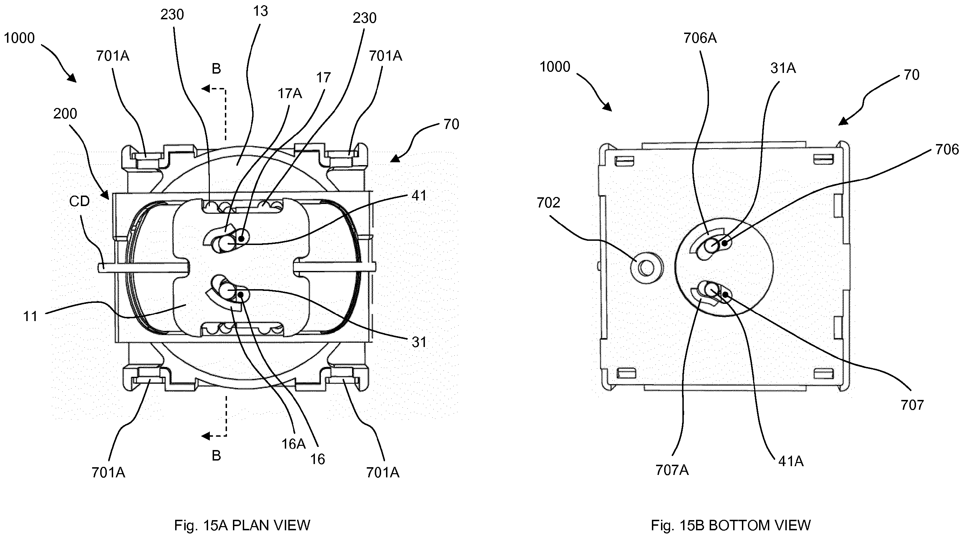

Next, referring to Figs. 11A to 12B, 15B, and 25, the base 70 will be described. As shown in Figs. 11A to 12B, the base 70 has, in an approximate center thereof, a barrel 708 that is higher than adjacent portions and has a recessed lower portion. As shown in Figs. 11A, 11B, and 15B, the upper surface of the barrel 708 is provided with a first base groove 706, a first guide wall 706A, a second base groove 707, and a second guide wall 707A.

The first base groove 706 and first guide wall 706A correspond to the first top wall groove 16 and first guide wall 16A, respectively, of the case 10A. The lower end of the shaft 31 is inserted in the first base groove 706 and is in contact with the first guide wall 706A formed on an edge of the first base groove 706. Similarly, the second base groove 707 and second guide wall 707A correspond to the second top wall groove 17 and second guide wall 17A, respectively, of the case 10A. The lower end of the shaft 41 is inserted in the second base groove 707 and is in contact with the second guide wall 707A formed on an edge of the second guide wall 707A.

The barrel 708 need not be necessarily provided. However, the disposition of the barrel 708 having the recessed lower portion can prevent the lower ends of the shafts 31, 41 from contacting the placement surface on which the braking device 1000 is placed and allows the lower ends of the shafts 31, 41 to be appropriately inserted.

The base 70 has two first engaging plates 701A on both edges of each of the left and right side surfaces thereof. The base 70 also has two second engaging plates 701B on both edges of the front side surface thereof and has one second engaging plate 701B in an approximate center of the rear side surface thereof. The first engaging plates 701A are engaged with the first engaging grooves 111A of the case 10A. The second engaging plates 701B are engaged with the second engaging grooves 111B of the case 10A. Thus, the case 10A and base 70 are engaged with each other, forming the cabinet.

As shown in Figs. 12A, 12B, 15B, 25, and the like, the base 70 has, on the outer surface of the bottom thereof, a mounting tube 702 used to dispose the braking device 1000 in a head box (corresponding to the cabinet 106 in the first embodiment) of a shielding device. For example, by fitting the mounting tube 702 into a member, such as a shaft, disposed in the head box, the braking device 1000 can be stably disposed in the head box.

### 2-2 Assembly Configuration

Next, a state in which the above members are assembled will be described with reference to Figs. 14A to 18B. Figs. 14A and 14B are assembly drawings of the braking device 1000 obtained by assembling these members. As shown in Figs. 14A and 14B, the braking device 1000 appears to consist of the cabinet where the case 10A and base 70 are connected together, and the arrangement member 200 disposed so as to cover the case 10A from above. This assembly is performed with the center axes of the respective members aligned in the up-down direction, as shown in Figs. 11A to 12B. Specifically, the internal gear-provided carrier 260 and the sun gear-provided weight holder 320 holding the weights 340 are assembled with the plate 300 therebetween. At this time, the planetary gears 280 on the internal gear-provided carrier 260 and the sun gear 323 on the sun gear-provided weight holder 320 are engaged with each other.

Then, the shaft 31 is horizontally slid to the first top wall groove 226 and first bottom wall groove 228 in the slider 220 with the knurled roller 240 located inside the slider 220 and with the pinion gear 50 located outside the slider 220. Also, the shaft 41 is horizontally slid to the second top wall groove 227 and second bottom wall groove 229 with the roller 42 located inside the slider 220. Then, in order to engage the internal gear 261 on the internal gear-provided carrier 260 and the pinion gear 50 with each other, the slider 220 and internal gear-provided carrier 260 are move relatively so as to approach each other.

Then, the base 70 is disposed below these members and covered with the case 10A from above in such a manner that the protrusions 230 of the slider 220 are passed through the grooves 118 of the case 10A, as shown in Fig. 24. At this time, it is confirmed that the coil spring SP on the slider 220 is in contact with the inner circumferential wall of the case 10A, the slider 220 is energized in the front direction, and the protrusions 230 are not disengaged from the support grooves 114. Then, the case 10A and base 70 are fixed to each other by engaging the first engaging grooves 111A and second engaging grooves 111B in the case 10A and the first engaging plates 701A and second engaging plates 701B on the base 70 with each other.

Finally, the cabinet consisting of the case 10A and base 70 is covered with the arrangement member 200 from above. Then, the arrangement member 200 and case 10A are fixed to each other by engaging the nails 209 on the arrangement member 200 with the engaging holes 19 in the case 10A.

The braking device 1000 thus assembled is shown in Figs. 14A to 14C. After the assembly of the braking device 1000 is complete, the first cord CD is disposed outside the front wall 205 of the arrangement member 200 and above the first front groove 201. Then, the second cord CD is inserted into the first front groove 201 of the arrangement member 200 through the first front cord insertion part 201A. Then, the third cord CD is inserted into the second front groove 202 through the second front cord insertion part 202A.

Then, these cords CD are passed through the guide grooves 113 formed in the front and rear side walls of the case 10A and the through holes 225 formed in the front and rear walls of the slider 220.

Then, of these cords CD, the first cord CD is passed so as to be located outside the rear wall 206 of the arrangement member 200 and above the first rear groove 203. Then, the second cord CD is drawn out of the first rear groove 203 of the rear wall 206 of the arrangement member 200 through the first rear cord insertion part 203A. Then, the third cord CD is drawn out of the second rear groove 204 through the second rear cord insertion part 204A. Thus, a state shown in Figs. 14A and 14B is obtained.

Fig. 14C is a left side view of the braking device 1000, that is, a side view seen from the direction of an arrow X in Fig. 14A. As is seen in the side view of Fig. 14C, the case 10A, arrangement member 200, and base 70 are disposed in the braking device 1000 sequentially from above, and the protrusions 230 are supported by the support grooves 114.

As is seen in the plan view of Fig. 15A, the case 10A, the arrangement member 200, and a part of the base 70 are disposed in the braking device 1000 sequentially from the center. As is seen in Figs. 14A, 14B, and 15A, the upper end of the shaft 31 passes through the first top wall groove 226 of the slider 220 and then the first top wall groove 16 of the case 10A and then exits the case 10A. Similarly, the upper end of the shaft 41 passes through the second top wall groove 227 of the slider 220 and then the second top wall groove 17 of the case 10A and then exits the case 10A.

The shaft 31 is in contact with the first guide wall 16A on the edge of the first guide wall 16A, and the shaft 41 is in contact with the second guide wall 17A on the edge of the second top wall groove 17.

As is seen in the bottom view of Fig. 15B, the lower end of the shaft 31 is inserted in the first base groove 706 of the base 70, and the lower end of the shaft 41 is inserted in the second base groove 707 thereof. Note that a portion corresponding to the barrel 708 of the surface on which the mounting tube 702 is disposed may be covered with a surface so that the lower ends of the shafts 31, 41 are not seen from outside.

### 2-2-2 Internal Structure in Assembled State

Next, referring to Figs. 16A to 18B, the internal structure in an assembled state will be described. Fig. 16 is a perspective view showing a state in which the arrangement member 200 and case 10A are removed from the assembled braking device 1000 shown in Fig. 14. As shown in Figs. 16A and 16B, the shafts 31, 41 protrude upward from the slider 220. The movement of the shaft 31 in the first top wall groove 226 is limited to the width direction of the slider 220. Similarly, the movement of the shaft 41 in the second top wall groove 227 is limited to the width direction of the slider 220. Note that the cords CD (not shown) are inserted in the through holes 225 of the slider 220 in the front-rear direction of the slider 220 so as to be longitudinally arranged.

Figs. 17A and 17B are perspective views showing a state in which the slider 220 is removed from the braking device 1000 shown in Figs. 16A and 16B. The cords CD (not shown) are inserted in the front-rear direction of the braking device 1000 so as to be sandwiched between the knurled roller 240 and roller 42. The pinion gear 50 and internal gear 261 are engaged with each other. Accordingly, when tension is applied to the cords CD, friction occurs between the cords CD and knurled roller 240. Thus, the pinion gear 50 rotates integrally with the knurled roller 240, and the rotation of the pinion gear 50 is transmitted to the internal gear 261. As a result, the internal gear 261 rotates, and the support shafts 263 disposed on the flange 262 along with the internal gear-provided carrier 260 revolve. Thus, the planetary gears 280 rotatably supported by the support shafts 263 starts to revolve while rotating.

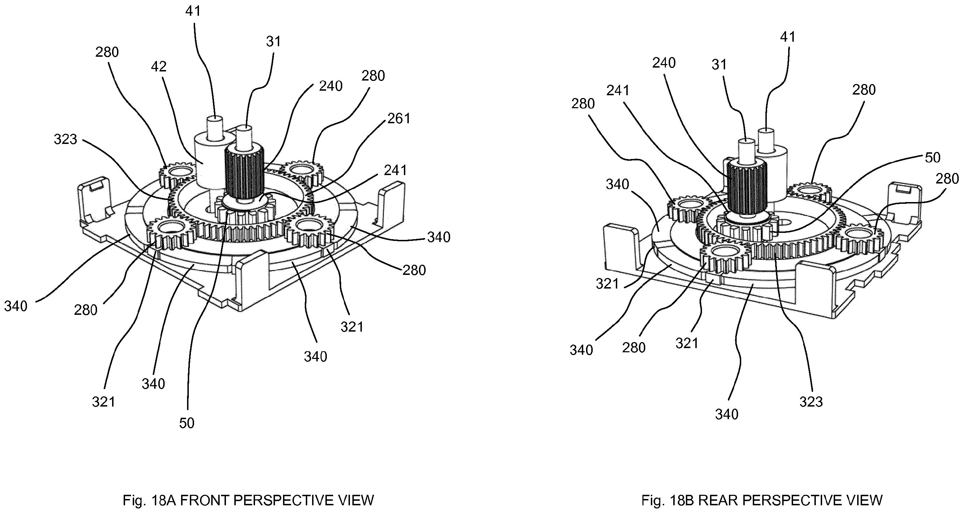

Figs. 18A and 18B are perspective views showing a state in which the internal gear-provided carrier 260 is further removed from the braking device 1000 shown in Fig. 17. As shown in Fig. 18, the planetary gears 280 and sun gear 323 are engaged with each other. Accordingly, the rotation of the planetary gears 280 is transmitted to the sun gear 323, and the sun gear-provided weight holder 320 starts to rotate. As a result, as shown in Fig. 25, the weights 340 held by the depressions 322 of the sun gear-provided weight holder 320 start to rotate. Then, when the rotation speed exceeds a predetermined value, the weights 340 contact the inner wall of the case 10A by centrifugal force. Thus, resistance is given to the rotation of the knurled roller 240.

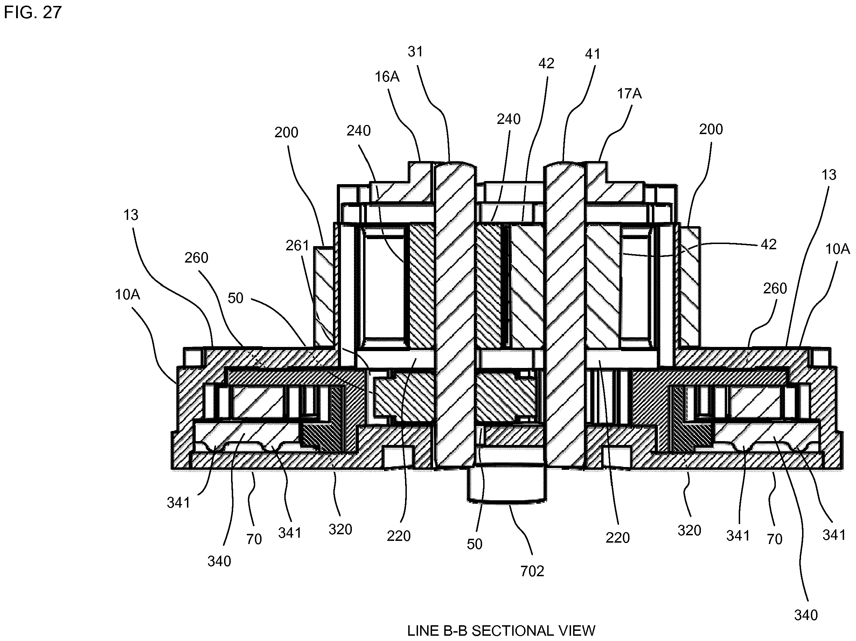

Next, referring to Figs. 26 and 27, the positional relationships among the members of the assembled braking device 1000 will be described in detail. Fig. 26 is a sectional view taken along line A-A in Fig. 14. As shown in Fig. 26, the pinion gear 50 around the shaft 31 and the internal gear 261 on the internal gear-provided carrier 260 are engaged with each other. The rotation of the internal gear 261 is transmitted to the planetary gears 280 through the support shafts 263 of the internal gear-provided carrier 260. The planetary gears 280 are engaged with the sun gear 323 on the sun gear-provided weight holder 320 and the inner circumferential gear 115 in the case 10A. Accordingly, when rotation caused by the pinion gear 50 is transmitted to the planetary gears 280, the planetary gears 280 revolve around the central portion of the internal gear 261 within the space between the sun gear 323 and inner circumferential gear 115.

Fig. 27 is a sectional view taken along line B-B in Fig. 15A. As shown in Fig. 27, in the second embodiment, the line B-B sectional view is approximately symmetrical with respect to the mounting tube 702. The shaft 31 and shaft 41 protrude from the upper edge of the case 10A and the lower edge of the base 70. In the second embodiment, the upper edges of the first guide wall 16A and second guide wall 17A have approximately the same height as the upper ends of the shaft 31 and shaft 41.

The knurled roller 240 and roller 42 are located in the slider 220. The pinion gear 50 is located outside the slider 220 with the slider 220 between the pinion gear 50 and knurled roller 240. The pinion gear 50 and internal gear 261 are engaged with each other.

Portions from an upper portion to the collar 13 of the case 10A are covered by the arrangement member 200. The lower edge of the case 10A is engaged with the base 70. The weights 340 are held by an upper portion of the base 70. In the second embodiment, the weights 340 are detachable. Accordingly, the number or type of weights 340 may be changed in accordance with the required braking force. Specifically, if a greater braking force is required, the number of weights 340 may be increased, or weights having higher density may be held by the sun gear-provided weight holder 320. On the other hand, if the required braking force is small, the number of weights 340 may be reduced. Note that the weights 340 are preferably symmetrically disposed on the surface of the sun gear-provided weight holder 320 on which the weights 340 are to be held, in terms of stability during rotation. In the present embodiment, the protrusions 341 of the weights 340 and the bottom of the base 70 are in contact with each other and thus the resistance between the weights 340 and base 70 during rotation is reduced.

### 2-3 Operation

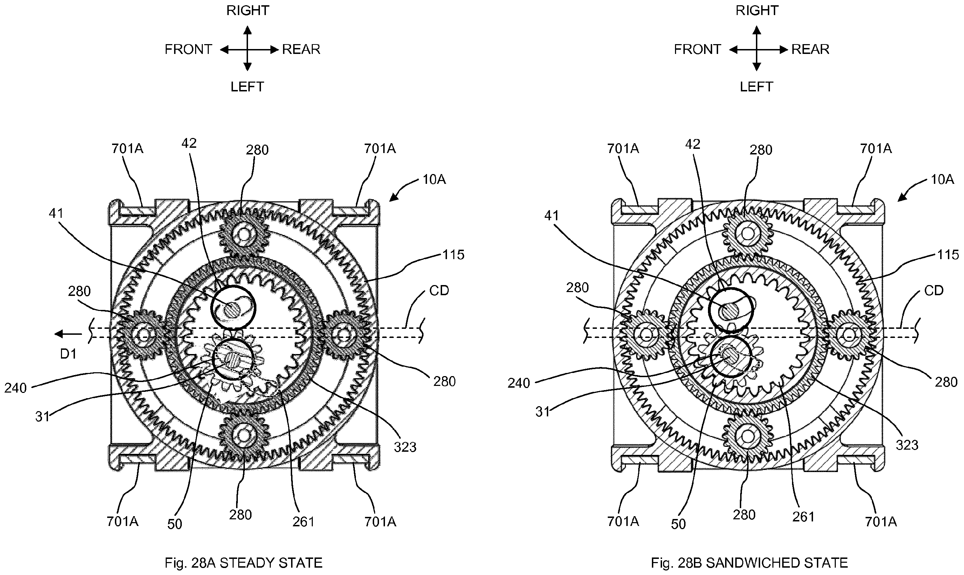

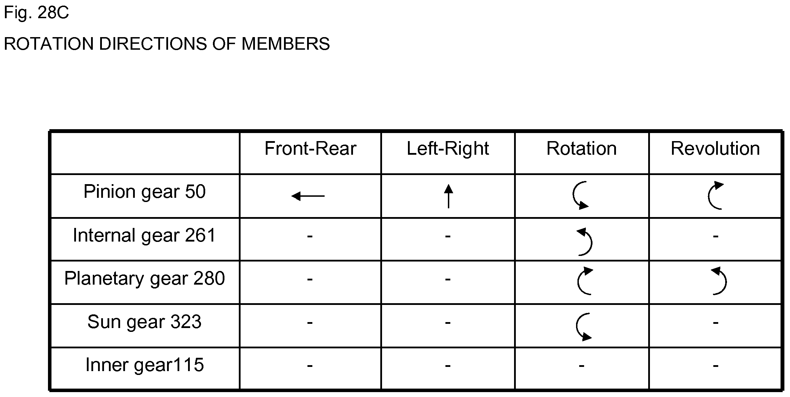

Next, referring to Figs. 28A and 28B, the operation of the braking device 1000 of the second embodiment will be described. Fig. 28A is a drawing showing a state in which no tension is being applied to the cords CD (steady state). Fig. 28B is a drawing showing a state in which tension is being applied to the cords CD and the cords CD are sandwiched between the knurled roller 240 and roller 42 (sandwiched state). Fig. 28C is a table showing the rotation directions of the members when the state in Fig. 28A is changed to the state in Fig. 28B. As with Fig. 26, Figs. 28A and 28B are sectional views taken along line A-A in Fig. 14C. For convenience, the circumference of the roller 42 which is not shown in the sectional views is shown so as to be overlaid on the perimeter of the shaft 41, and the circumference of the knurled roller 240 which is not shown in the sectional views is shown so as to be overlaid on the perimeter of the shaft 31. The circumference of the knurled roller 240 is not exactly circular, but is shown so as to be approximately circular for simplification.

As described above, in the steady state, the coil spring SP is in contact with the rear inner wall of the case 10A and is pressing the slider 220 forward, as shown in Fig. 28A. Accordingly, the slider 220 is located ahead of the case 10A. For this reason, the shaft 31 whose position is regulated by the first top wall groove 226 and first bottom wall groove 228 of the slider 220 and the shaft 41 whose position is regulated by the second top wall groove 227 and second bottom wall groove 229 thereof move forward along with the slider 220. The distance between the first top wall groove 16 and second top wall groove 17 of the case 10A held above the slider 220 is shorter in more front positions. Similarly, the distance between the first base groove 706 and second base groove 707 of the base 70 is shorter in more front positions. Accordingly, the distance between the roller 42 rotatably supported by the shaft 41 and the knurled roller 240 rotatably supported by the shaft 31 is shorter. Specifically, the first top wall groove 16 and first base groove 706 serve as regulation grooves into which the shaft 31 of the knurled roller 240 is movably fitted and that regulate the movement of the knurled roller 240 which is not along the grooves. Similarly, the second top wall groove 17 and second base groove 707 serve as regulation grooves into which the shaft 41 of the roller 42 is movably fitted and that regulate the movement of the roller 42 which is not along the grooves. Also, the first top wall groove 16 and first base groove 706 are formed so as to be concentric with the center point of the inner circumferential surface of the internal gear-provided carrier 260 in plan view. Thus, even if the shaft 31 moves in the grooves, the pinion gear 50 can be continuously engaged with the internal gear 261 on the internal gear-provided carrier 260.

As seen above, as the distance between the knurled roller 240 and roller 42 is reduced, the knurled roller 240 is pressed by the roller 42, and the cords CD are sandwiched between the knurled roller 240 and roller 42. That is, in the second embodiment, the coil spring SP also serves as an energizing member that always energizes the knurled roller 240 so that the knurled roller 240 is pressed by the roller 42.

Assume that tension is applied to the cords CD in the direction of an arrow D1 (forward) in the braking device 1000 in the steady state. At this time, due to the friction between the cords CD, and the knurled roller 240 and roller 42, the knurled roller 240 rotates counterclockwise, and the roller 42 rotates clockwise. Due to the rotation of the knurled roller 240, the pinion gear 50 fixed so as to share the same shaft 31 also rotates in the same direction (counterclockwise) as the knurled roller 240. At this time, as shown in Fig. 28B, the shaft 31 and shaft 41 move forward in plan view and are guided to a sandwiching guide slope 16a of the first top wall groove 16 and a sandwiching guide slope 17a of the second top wall groove 17, respectively, of the case 10A. Thus, the shaft 31 and shaft 41 approach each other in the left-right direction, and the cords CD are sandwiched between the knurled roller 240 and roller 42 with stronger force. The knurled roller 240 reliably rotates in accordance with the movement of the cords CD. Since the pinion gear 50 is engaged with the internal gear 261, the internal gear 261 rotates counterclockwise by a force given by the teeth of the pinion gear 50. The internal gear-provided carrier 260 also rotates counterclockwise along with the internal gear 261. Thus, the planetary gears 280 on the internal gear-provided carrier 260 also revolve counterclockwise. Since the planetary gears 280 are engaged with the inner circumferential gear 115 fixed by the sun gear 323 and case 10A, the planetary gears 280 revolve counterclockwise while rotating in a direction (clockwise) opposite to the revolving direction. Accordingly, the sun gear 323 engaged with the planetary gears 280 inside the planetary gears 280 rotates in a direction (counterclockwise) opposite to the rotation of the planetary gears 280. At this time, the rotation of the sun gear 323 is speeded up by the planetary gears 280. Thus, the weights 340 held by the sun gear-provided weight holder 320 that rotates with the sun gear 323 also start to rotate. Since the case 10A and base 70 are fixed, the inner circumferential gear 115 engaged with the planetary gears 280 outside the planetary gears 280 does not rotate even during the rotation of the planetary gears 280.

Then, as shown in Fig. 28B, when the knurled roller 240 and roller 42 approach the limit (sandwiched state), the knurled roller 240 stops the movement thereof along the internal gear 261 although it continuously rotates. At this time, the rotation of other members caused by the rotation of the knurled roller 240 continues. Then, when the weights 340 contact the inner wall of the case 10A by centrifugal force, resistance against the rotation occurs. Specifically, as the moving speed of the cords CD increases, the rotation speed increases and thus the centrifugal force increases. Due to the increase in the centrifugal force, the weights 340 contact the inner wall of the case 10A more strongly, increasing the resistance. Thus, the moving speed of the cords CD (the fall speed of the sunlight shielding member) can be suppressed. If approximately constant tension is applied to the cords CD (e.g., if a sunlight shielding member suspended from the front cord CD of the braking device 1000 so as to be able to be raised and lowered falls freely in Fig. 10 of the first embodiment), the moving speed of the cords CD becomes approximately constant when a balance is struck between the tension applied to the cords CD and the resistance between the weights 340 and the inner circumferential wall of the case 10A. Thus, the braking device 1000 serves as a rotary damper against the movement of the cords CD and is able to lower the sunlight shielding member slowly.

Fig. 28C is a table showing the rotation directions of the members (the rotation direction of the pinion gear 50 additionally includes the front-rear direction and fastening direction in plan view) when the steady state is changed to the sandwiched state.

On the other hand, if tension is applied to the cords CD in a direction (backward) opposite to the direction of the arrow D1, the knurled roller 240 and roller 42 rotate in a direction opposite to the above direction. As a result, the shaft 31 and shaft 41 are guided to a release guide slope 16b of the first top wall groove 16 and a release guide slope 17b of the second top wall groove 17, respectively, and thus move so as to depart from each other. Thus, the sandwiching force of the knurled roller 240 acting on the cords CD is weakened so that the cords CD can be pulled by a weak force. For this reason, if the braking device 1000 is disposed in the head box as shown in Fig. 10, it is preferred to set the direction in which tension is applied to the cords CD in the front direction in Fig. 28 to the sunlight shielding member lowering direction and to set the direction in which tension is applied to the cords CD in the rear direction in Fig. 28 to the sunlight shielding device raising direction.

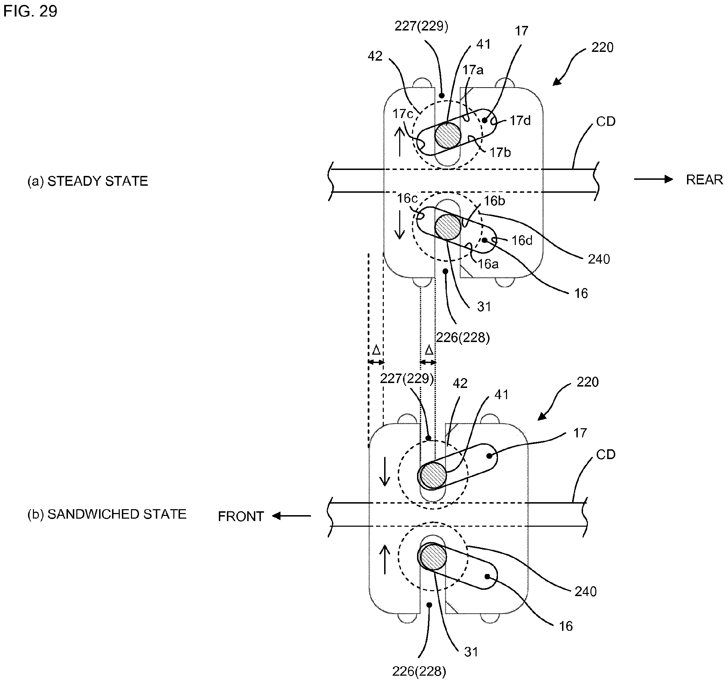

Next, referring to Figs. 29A and 29B, the movement of the slider 220 when the steady state is changed to the sandwiched state will be described, (a) corresponds to Fig. 28A, and (b) corresponds to Fig. 28B.

When the steady state in (a) is changed to the sandwiched state in (b), the shaft 41 and roller 42, and the shaft 31 and knurled roller 240 move in the front direction in the drawings due to the friction between these members and the cords CD. At this time, the shaft 41 is in contact with the second top wall groove 227 and second bottom wall groove 229. Accordingly, a forward force is applied to the second top wall groove 227 and second bottom wall groove 229 as the shaft 41 moves forward. Similarly, the shaft 31 is in contact with the first top wall groove 226 and first bottom wall groove 228. Accordingly, a forward force is applied to the first top wall groove 226 and first bottom wall groove 228 as the shaft 31 moves forward. Accordingly, when the shafts 31, 41 move forward by Δ, the slider 220 also moves forward by Δ.

While, in the second embodiment, the weights 340 are held by the sun gear-provided weight holder 320, the weights 340 may be held using any other method. For example, the weights 340 may be held by the internal gear-provided carrier 260. In this case, the planetary gears 280, plate 300, and sun gear-provided weight holder 320 may be omitted. Note that if the planetary gears 280 are omitted, the effect of speeding up the rotation of the sun gear 323, sun gear-provided weight holder 320, and weights 340 would not be obtained.

As seen above, the braking device 1000 of the second embodiment can be said to be a brake configured to change the sandwiched state so that the cords are sandwiched by the sandwiching object when the cords and sandwiching object move relatively in one direction and the cords are released in a non-bent state when the cords and sandwiching object move relatively in another direction. As used herein, the term "the cords are released" refers to a state in which the cords are allowed to move, and the cords and sandwiching object may be in contact with each other or may be in non-contact with each other.

As described above, the braking device 1000 of the second embodiment can be said to be a brake that brakes movement of a cord and includes a movement converter configured to convert movement of a cord into movement of another member, wherein the movement converter includes sandwiching object configured to allow the cord to be sandwiched, and the sandwiching object are configured to change a sandwiched state so that the cord is sandwiched by the sandwiching object when the cord and the sandwiching object move relatively in one direction and the cord is released in a non-bent state when the cord and the sandwiching object move relatively in another direction.

The braking device 1000 further includes a resistance provider configured to, when the cord moves relatively in the one direction, generate resistance in association with movement of the cord.

The sandwiching object of the braking device 1000 includes a roller disposed in a position in which the roller can contact the cord and configured to be movable in a predetermined range and a sandwiching member disposed so that the cord is sandwiched between the sandwiching member and the roller. The roller is configured to move to a first position when the cord and the roller moves relatively in one direction and to move to a second position when the cord and the roller moves relatively in another direction.

In the braking device 1000, the cord is sandwiched between the roller and the sandwiching member when the roller is located in the first position and the cord is released in a non-bent state when the roller is located in the second position.

In the braking device 1000, the roller is configured to move so that friction acting between the roller and the cord when the roller is located in the second position becomes smaller than friction acting between the roller and the cord when the roller is located in the first position.

In the braking device 1000, when the roller is located in the first position, rotation of the roller caused by movement of the cord is outputted to the resistance provider, and when the roller is located in the second position, rotation of the roller caused by movement of the cord is not outputted to the resistance provider.

### Advantageous Effects

The braking device 1000 of the second embodiment are able to produce the following advantageous effects:
(1) The cords CD are not bent when they move freely. Thus, the bending resistance can be reduced, and the cords CD can move more smoothly.
(2) The friction between the sandwiching object and cords CD is changed due to the displacement of the sandwiching object (knurled roller 240 and roller 42). Thus, the cords CD are released in a non-bent state.
(3) A selection as to whether the rotation caused by the movement of the cords CD is transmitted to the resistance provider RA is made in accordance with the displacement of the sandwiching object (knurled roller 240 and roller 42). Thus, the cords CD are released in a non-bent state.
(4) The operation force required to pull the cords can be reduced. Also, the cords CD can be reliably sandwiched during automatic operation (automatic fall) and thus an unintended fall can be prevented.
(5) If forward tension is applied to the cords CD, the knurled roller 240 and roller 42 move so as to approach each other. Thus, the cords CD can be sandwiched strongly, and the knurled roller 240 can be rotated reliably so that the rotation can be transmitted to the pinion gear 50.
(6) If rear tension is applied to the cords CD, the knurled roller 240 and roller 42 move so as to depart from each other. Thus, the sandwiching force acting on the cords CD can be weakened so that the cords CD are allowed to move freely.
(7) The regulation grooves formed in the cabinet (case 10A and base 70) can prevent the knurled roller 240 and roller 42 from moving in an unintended direction.
(8) Since the slider 220 is held in a floating state, it is possible to reduce the resistance and to suppress the wear in the members.
(9) Since the waveform part 116 and step 117 are disposed in the case 10A, the friction resistance can be reduced.
(10) The protrusions 341 disposed on the weights 340 can reduce the resistance.
(11) The plate 300 can prevent the inclination of the planetary gears 280 and also can prevent the interference between the planetary gears 280 and weights 340.
(12) The first guide wall 16A and second guide wall 17A can prevent the case 10A from being shaved due to the pressure from the shafts 31, 41.
(13) The step 51 disposed on the pinion gear 50 can reduce the sliding resistance between the pinion gear 50 and slider 220.
(14) Since the weights 340 are detachable, the number or type of weights 340 can be changed in accordance with the required braking force.
(15) Since the mechanism corresponding to the movement converter DT and the mechanism corresponding to the resistance provider RA are disposed approximately vertically, the area of the entire braking device 1000 in plan view can be reduced.

### 3. Third embodiment

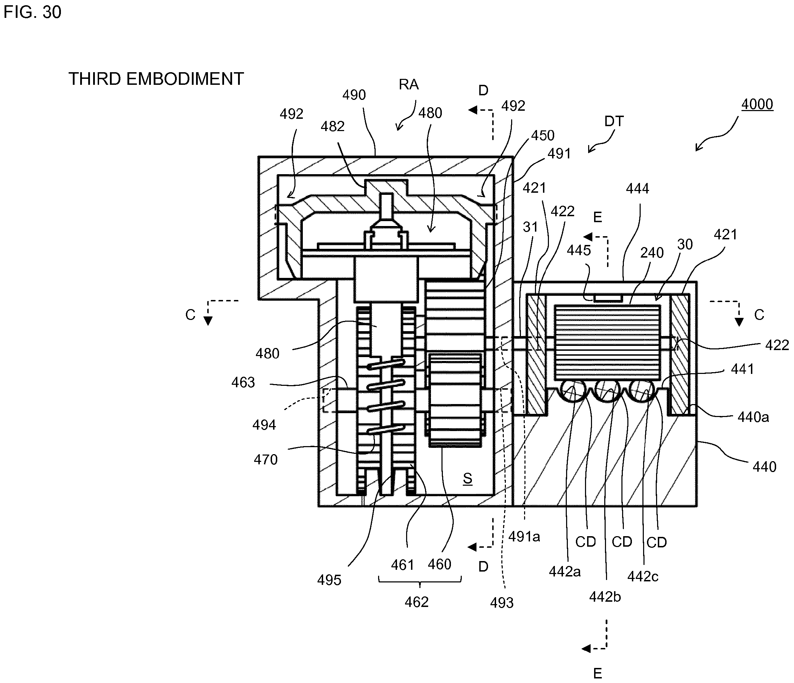

Next, the braking device 4000 according to the third embodiment will be described with reference to FIGS. 30 to 37. As shown in FIG. 30, the braking device 4000 of the present embodiment has a configuration in which the motion converting portion DT and the resistance imparting portion RA are connected by a shaft core 31.The outline of this embodiment will be described below.

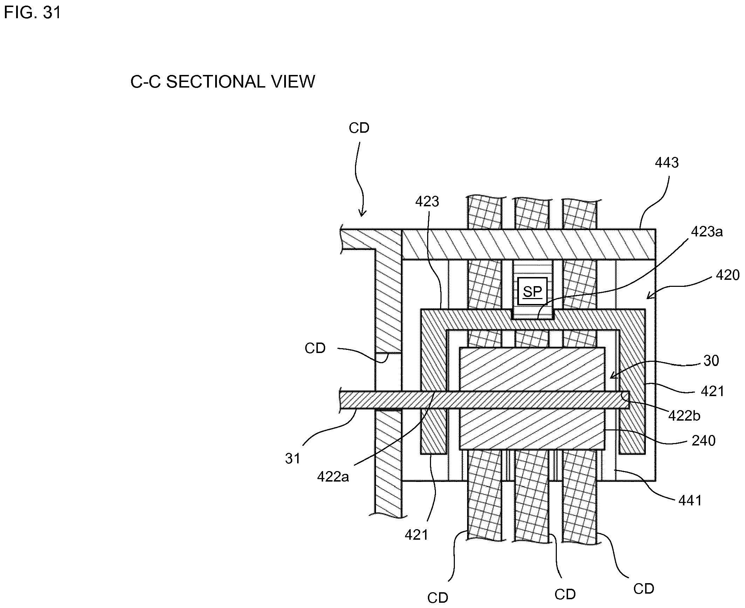

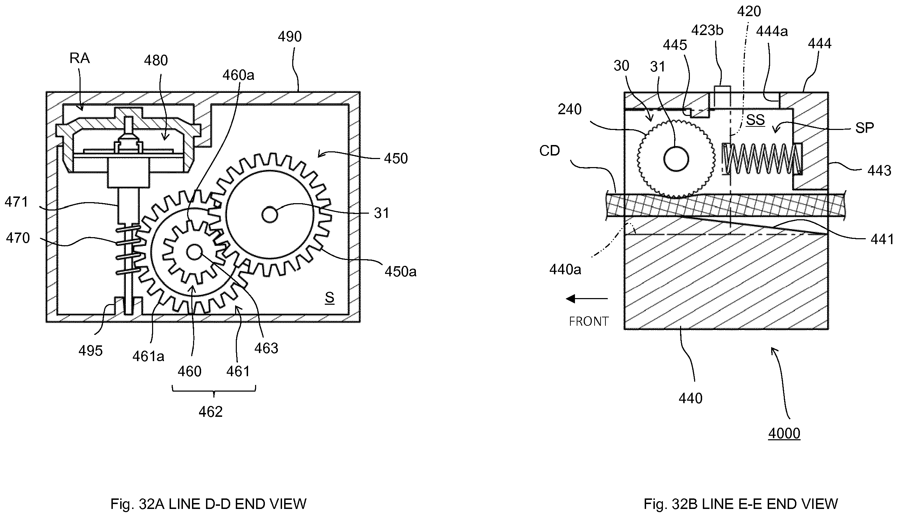

30, FIG. 31, and FIG. 32(b), the pair of clamping members of the clamping body are formed on the tension transmission roller 30 and the fixing member 440 And a slope 441 .That is, in the present embodiment, only one of the clamping members is configured to be movable.Further, as shown in FIGS. 30 and 32, the rotation of the tension transmission roller 30 is sequentially transmitted to the speed increasing gear 462 and the worm gear 470 which are composed of the spur gear 450, the small gear 460, and the large gear 461 via the shaft center 31 .Then, the rotation of the worm gear 470 is transmitted to the centrifugal brake 480 as the resistance application portion RA, whereby the braking force is applied to the tension transmission roller 30.The spur gear 450, the speed increasing gear 462, the worm gear 470, and the centrifugal brake 480 are covered with a housing 490 having an internal space S at a position adjacent to the fixing member 440.30, the downward direction in FIG. 31 and the left direction in FIGS. 32 (a) and (b) correspond to the front direction of the above-described embodiment.

In this embodiment, as shown in FIGS. 30 and 32(b), the fixing member 440 is a substantially rectangular parallelepiped member and is fixed to a head box or the like of a shielding device, for example.On the upper portion of the fixing member 440, an inclined surface 441 is formed as shown in FIG. 32 (b). 30, three grooves 442a to 442c extending in the extending direction of the cord CD are formed in order to position the three cords CD, as shown in FIG.

On the other hand, as shown in FIG. 30, the tension transmission roller 30 is provided with a shaft core 31 and knurls 240 similarly to those of the second embodiment, and is held by a slider 420 as a holding member via a shaft core 31.

The slider 420 has a substantially U-shaped configuration (see FIG. 31) including a pair of parallel plate-shaped support portions 421 and a rear wall 423 connecting these to the rear, and straddles the inclined surface 441 on the upper surface 440 a of the fixing member 440 And can be translated in the extending direction of the code CD along the upper surface 440 a of the fixing member 440.That is, in the present embodiment, the upper surface 440 a of the fixing member 440 functions as a guide portion that guides the slider 420.A through hole 422 is formed in each of the pair of plate-like support portions 421 so as to rotatably hold the shaft center 31.Further, as shown in FIG. 32 (b), between the holding groove 423 a formed in the rear wall 423 of the slider 420 and the wall portion 443 fixed to the rear position of the fixing member 440, A coil spring SP is disposed, and the slider 420 is urged forward (downward in FIG. 31, leftward in FIG. 32 (b)).

Further, as shown in FIGS. 30 and 32(b), the position of the slider 420 on the upper side is regulated by the top wall 444 formed above the fixing member 440, and on the top wall 444, A protrusion 445 that protrudes and engages with the rear wall 423 of the slider 420 prevents the slider 420 from slipping forward is formed.Further, as shown in FIG. 32 (b), an opening 444 a is formed in the top wall 444 and protrudes upward from the rear wall 423 at a position corresponding to the opening 444 a of the rear wall 423 of the slider 420 A projecting portion 423 b is formed and the slider 420 is accommodated in the accommodating space SS formed by the fixing member 440, the wall portion 443, and the top wall 444, and the slider 420 is operated from outside to tension the code CD It is possible to perform an operation such as passing between the roller 30 and the inclined surface 441.

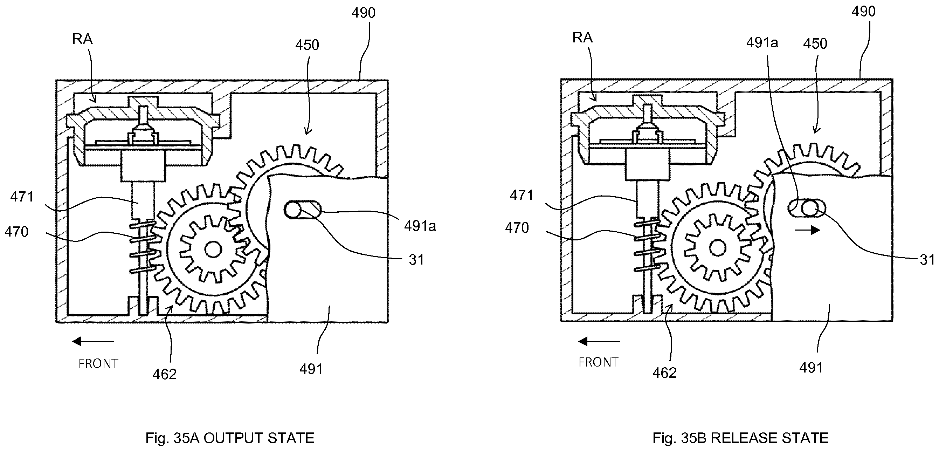

Next, as shown in FIG. 30 and FIG. 32(a), the spur gear 450 is attached to the shaft core 31 that rotates with the rotation of the tension transmission roller 30.31 and FIG. 35) formed on a wall surface 491 on the side of the fixing member 440 of the housing 490, and the tension transmission roller 30, the shaft core 31 and the spur gear 450 (See FIG. 35) within the range of the elongated hole 491 a (see FIGS. 31 and 35) as the slider 420 moves in the fore-and-aft direction.The gear teeth 450a of the spur gear 450 can mesh with the gear teeth 460a of the small gear 460 of the speed increasing gear 462 having a smaller diameter than the gear teeth 450a.The small gear 460 and the large gear 461 are rotatably supported by support walls 493 and 494 respectively formed on a wall surface 491 of the housing 490 on the side of the fixing member 440 and a wall surface 492 opposed thereto It is configured to rotate integrally with the center.The large gear 461 has substantially the same diameter as that of the spur gear 450 and is arranged to always mesh with the worm gear 470.

The worm gear 470 is configured to convert the rotation about the lateral direction (the lateral direction in FIG. 30) of the large gear 461 of the speed increasing gear 462 to the rotation about the vertical direction, and transmit the rotation to the central shaft 471.One end of the center shaft 471 is rotatably supported by the lower support portion 495 of the housing 490 and the other end of the center shaft 471 is rotatably supported by the upper support portion 482 of the cylindrical case 481 of the centrifugal brake 480.Further, on the central shaft 471, the rotating body 483 of the centrifugal brake 480 is attached in a relatively non-rotatable manner in the cylindrical case 481.

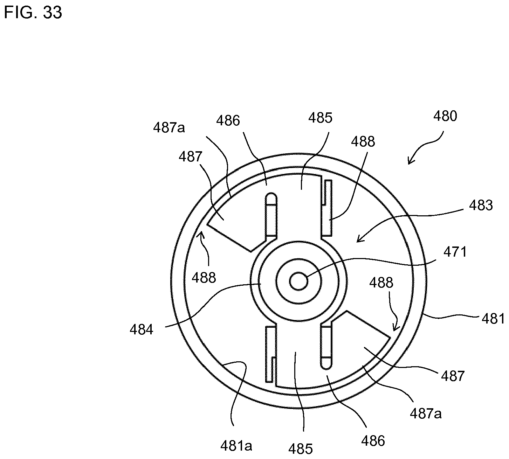

As shown in FIG. 33, the centrifugal brake 480 includes a rotating body 483 in the cylindrical case 481.The rotating body 483 includes a central portion 484 fixed to the center shaft 471, a pair of arm portions 485 extending outward in the radial direction from the center portion, an elastically deforming portion 486 extending in the circumferential direction from the edge portion of the arm portion 485 , And a centrifugal enlarged diameter portion 487, and rotates as the central shaft 471 rotates.When the rotation of the center shaft 471 is slow, the centrifugal brake 480 has a gap 488 between the centrifugal enlarged diameter portion 487 and the cylindrical case 481, so that the braking torque applied to the center shaft 471 is small, and the center shaft 471 , The centrifugal force applied to the centrifugally enlarged diameter portion 487 increases and the elastic deformation portion 486 deforms so that the outer peripheral surface 487 a of the centrifugally enlarged diameter portion 487 rubs against the inner peripheral surface 481 a of the cylindrical case 481 So that the braking torque generated is increased.The magnitude of the braking torque can be adjusted by changing the elastic force of the elastic deformation part 486 and the size of the gap 488.

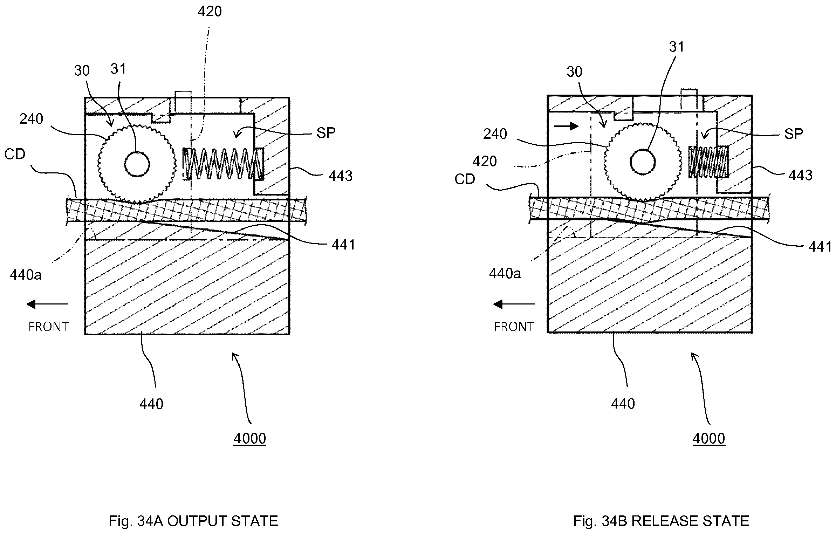

With the above-described configuration, in a state in which tension is not applied to the code CD (steady state), the knurl 240 presses the code CD by the coil spring SP via the slider 420 to approach the grooves 442 a to 442 c of the slope 441 .As a result, the tension transmission roller 30 (knurled 240) and the grooves 442 a to 442 c of the slanted surface 441 come into a state of clamping the cord CD, and as shown in FIG. 35 (a), the spur gear 450 Engages with the small gear 460, and is in a state (output state) in which the rotation of the tension transmission roller 30 can be transmitted to the resistance application portion RA (centrifugal brake 480).In this state, when the code CD moves forward (to the left in FIG. 34), the movement of the code CD is transmitted to the knurl 240, and the resistance is applied to the code CD by the resistance applying section RA.

On the other hand, when the code CD moves rearward (to the right in FIG. 34), as shown in FIG. 34 (b), the tension transmission roller 30 (knurled 240) rotates while the code CD moves, the code CD So that the slider 420 also moves rearward against the urging force of the coil spring SP via the shaft core 31.Then, as shown in FIG. 35 (b), the spur gear 450 does not mesh with the small gear 460 of the speed increasing gear 462, so that the rotation of the tension transmitting roller 30 can not be transmitted to the resistance applying portion RA (the centrifugal brake 480) Release state).Further, since the inclined surface 441 is inclined downward toward the rear, the space between the tension transmission roller 30 and the grooves 442 a to 442 c of the inclined surface 441 of the fixing member 440 is widened, the clamping of the cord CD weakens and the tension transmission Application of resistance to the code CD of the resistance applying portion via the roller 30 is eliminated.In this way, with the two configurations of the configuration in which the engagement of the gear disappears and the configuration in which the narrowing of the cord CD by the narrow landing body is weakened, when the cord CD is moved in the other end direction, the resistance CD is applied to the cord CD Therefore, it is possible to easily move the code CD.

In other words, the frictional force acting between the tension transmission roller 30 and the code CD when the tension transmission roller 30 is in the released state (the second position) is lower than the frictional force acting between the tension transmission roller 30 and the code CD, The tension transmission roller 30 moves so that the friction force acting between the tension transmission roller 30 and the code CD is smaller than the friction force acting between the tension transmission roller 30 and the cord CD.

When the tension transmission roller 30 is positioned at the first position, the braking device 4000 outputs the rotation of the tension transmission roller 30 caused by the movement of the code CD to the resistance application portion RA, and when the tension transmission roller 30 is in the second position , The rotation of the tension transmission roller 30 caused by the movement of the code CD is not outputted to the resistance application section RA.

### <Modification 1 of Third Embodiment

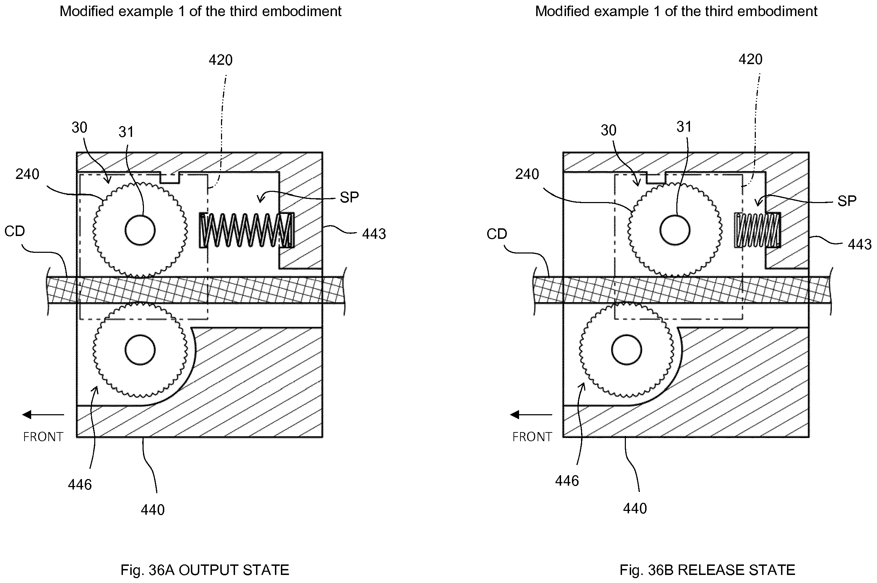

Regarding the constitution of the narrowly adhered object, instead of forming the clamping member facing the tension transmission roller 30 by the inclined surface 441, as shown in FIG. 36, instead of the inclined surface 441, it is rotatably fixed to the fixing member 440 It is also possible to use a fixed roller 446.In this case as well, in the clamped state shown in FIG. 36 (a), since the code CD is clamped and the gears also mesh, the movement of the code CD in the forward direction (left direction) And the braking force is applied to the cord.On the other hand, when the cord CD is moved backward, as the slider 420 moves rearward as shown in FIG. 36 (b), the distance between the tension transmission roller 30 and the fixed roller 446 widens and the narrow adhesion force At the same time, as shown in FIG. 35 (b), the meshing of the gear disappears and the rotation of the tension transmission roller 30 can not be transmitted to the resistance application portion RA.Therefore, also in this case, it can be said that it has two configurations, a configuration in which the meshing of the gear disappears and a configuration in which the narrowing of the cord CD by the narrow joining body is weakened.

That is, in the braking device 4000 according to the first modification of the third embodiment, the friction acting between the tension transmission roller 30 and the cord CD when the tension transmission roller 30 is in the released position (the second position) The tension transmission roller 30 moves such that the force becomes smaller than the frictional force acting between the tension transmission roller 30 and the code CD when the tension transmission roller 30 is positioned at the position (first position) in the output state .

The braking device 4000 according to the first modification of the third embodiment outputs the rotation of the tension transmission roller 30 caused by the movement of the code CD to the resistance application portion RA when the tension transmission roller 30 is positioned at the first position , And does not output the rotation of the tension transmission roller 30 caused by the movement of the code CD to the resistance application portion RA when the tension transmission roller 30 is located at the second position.

### <Modification 2 of Third Embodiment

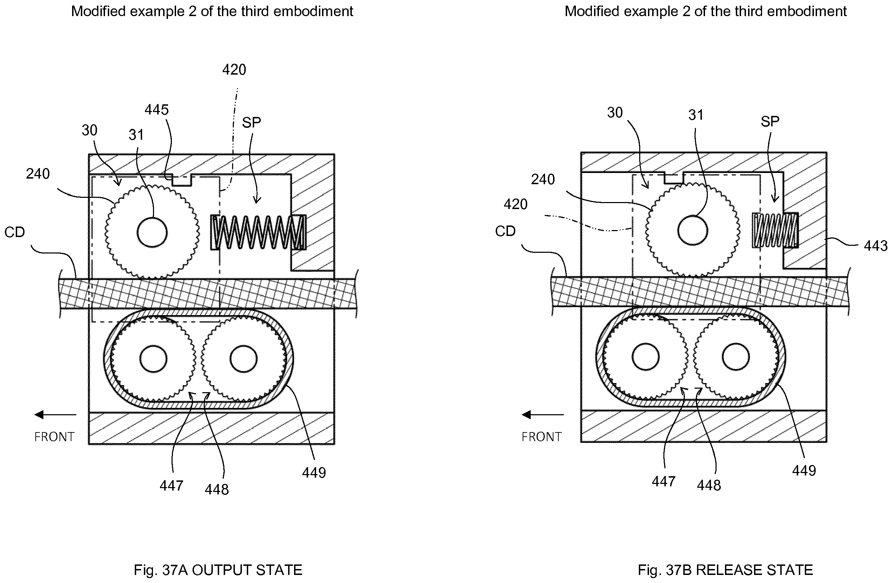

37, it is also possible to use a belt 449 wound around two rollers 447, 448 of the same shape provided horizontally in the front-rear direction as a clamping member opposed to the tension transmission roller 30 .In this case, unlike the above example, even in a state in which the steady state or code CD as shown in FIG. 37 (a) is pulled forward and the slider 420 is in front, as shown in FIG. 37 (b) The distance between the tension transmission roller 30 and the belt 449 (the distance between a pair of the narrowing members) is the same, even if the code CD as shown is pulled rearward and the slider 420 is behind, The sticking force due to the landing does not change.In this case, as shown in FIG. 35 (b), the engagement of the gear disappears, so that the rotation of the tension transmission roller 30 can not be transmitted to the resistance application portion RA.

In other words, the braking device 4000 according to the second modification of the third embodiment outputs the rotation of the tension transmission roller 30 caused by the movement of the code CD to the resistance application portion RA when the tension transmission roller 30 is positioned at the first position , And does not output the rotation of the tension transmission roller 30 caused by the movement of the code CD to the resistance application portion RA when the tension transmission roller 30 is located at the second position.

### <Action / Effect>

With the braking device 4000 according to the third embodiment, the following actions and effects can be obtained.
(1) Since the bending resistance is not bent (unbending) during free movement of the code CD, the bending resistance becomes small, and the code CD can move more smoothly.
(2) By changing the frictional force acting between the tension transmission roller 30 and the code CD by the displacement of the tension transmission roller 30, the code CD is released in a non-bending state.
(3) Due to the displacement of the tension transmitting roller 30, whether or not to transmit the rotation caused by the movement of the code CD to the resistance applying portion is switched or not is determined, whereby the code CD is released in a non-bending state.
(4) It is possible to reduce the operating force at the time of pulling operation and securely hold the cord CD at the time of automatic operation (automatic descent), thereby preventing unintentional falling.

### 4. Fourth embodiment

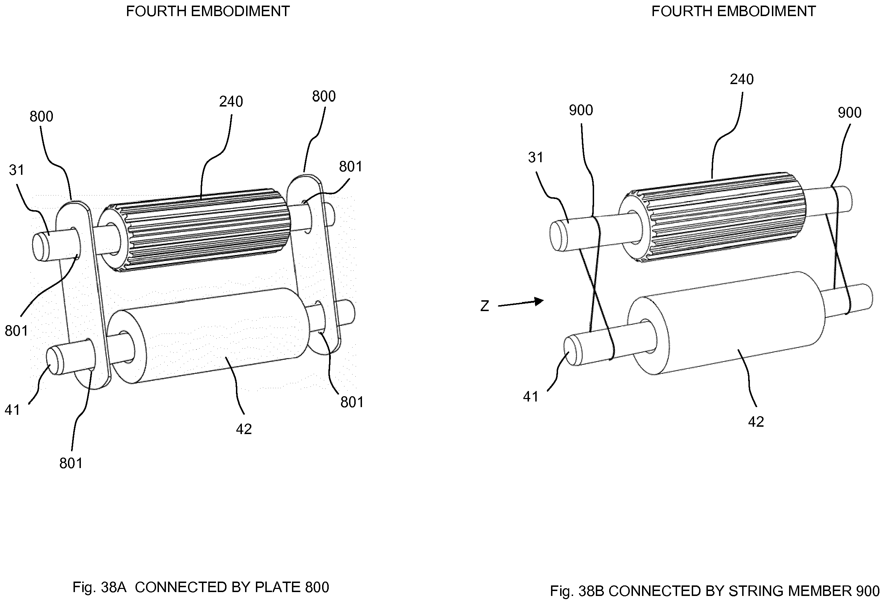

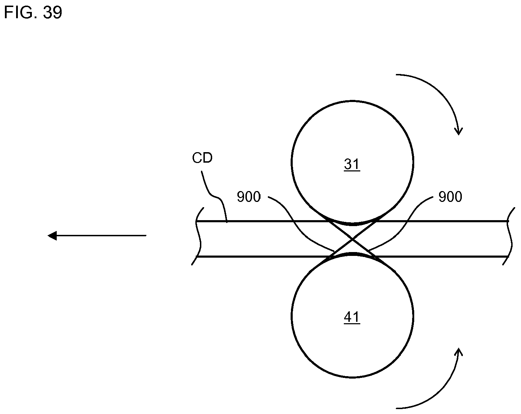

Next, a motion converting unit according to a fourth embodiment of the present invention will be described with reference to FIGS. 38 to 40. As shown in FIG. 38, in the fourth embodiment, the knurled portion 240 and the roller portion 42 are connected via the respective shaft cores 31 and shaft cores 41.Here, such a coupling method is arbitrary, and for example, as shown in FIG. 38 (a), a pair of plates 800 may be used.Here, in the fourth embodiment, the plate 800 is substantially rectangular, and for example, a metal plate 800 can be used.A through hole 801 is provided at a position corresponding to the shaft core 31 and the shaft core 41 of the plate 800, and by inserting the shaft core 31 and the shaft core 41 into the through hole 801, the knurling 240 and the roller portion 42 are connected be able to.In the case of using the string member 900, as shown in FIG. 39, since the knurled roller 240 and the roller portion 42 rotate in opposite directions during movement of the code CD, the string member 900 is configured to cross.Here, FIG. 39 is a schematic view of a state where the member of FIG. 38 (b) sandwiches the code CD as seen from the direction of the arrow Z. FIG.

Further, as shown in FIG. 38 (b), instead of the plate 800, the knurling 240 and the roller portion 42 may be connected by using the string member 900.

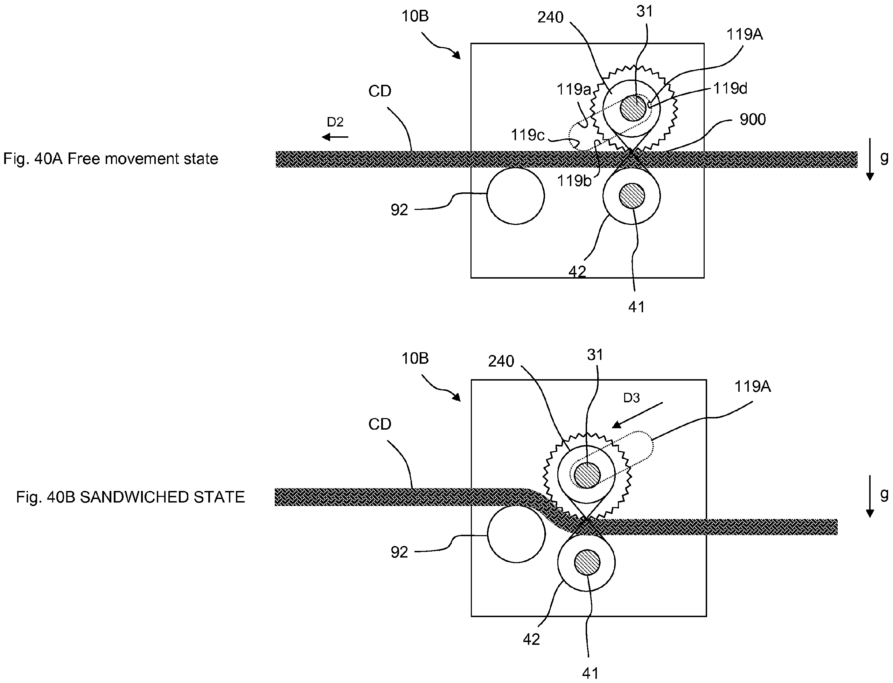

As shown in FIG. 40, such a member is provided inside the case 10 </ b> B so as to sandwich the cord CD between the knurled portion 240 and the roller portion 42.Here, in FIG. 40, in order to improve the visibility, explanation will be made using a mode in which the string member 900 in FIG. 38 (b) is used.Further, it is assumed that the gravity g acts in the direction indicated by the arrow g in FIG.For convenience of explanation, the direction of the arrow g is directed downward, and the direction opposite to the direction of the arrow g is directed upward.

In the case 10 </ b> B, a first side wall hole 119 </ b> A is provided at a position corresponding to the shaft core 31.The first side wall hole 119 </ b> A is an oblong shape that is inclined forward.These shapes are not particularly limited, and can be appropriately designed.

The shaft core 31 is movable along the first side wall hole 119 </ b> A.That is, the knurls 240 are rollers that are provided at positions that can contact the cord CD and can move in the vertical direction.Here, the inner peripheral surface is formed in the first side wall hole 119A by the clamping guide inclined surface 119a, the release guide inclined surface 119b, the clamping side restricting surface 119c and the release side restricting surface 119d.

Further, inside the case 10B, a support column 92 is fixed at a position facing the knurled section 240 with the cord CD interposed therebetween and ahead of the knurled section 240. As shown in FIG.

First, when a tension is applied to the code CD in the direction of the arrow D 2 from the state shown in FIG. 40 (a), due to the frictional force generated between it and the code CD, the knurled 240 moves in the direction of the arrow D 3 to the first side wall hole 119 A Move downward along.As shown in FIG. 40 (b), this position is taken as the first position which is the lower position in the movable direction having the vertical component.In this state, since the distance between the knurls 240 and the support pillars 92 in the vertical direction is small, the cord CD bends and enters a clamping state.That is, the support column 92 functions as a clamping member positioned with the cord CD sandwiched between the knurls 240.Further, the roller portion 42 functions as an auxiliary roller that moves in conjunction with the knurling 240.

Here, in the clamped state, when the shaft core 31 reaches the front limit of the movable range, the knurled knob 240 that has been substantially parallel moved starts rotation (clockwise in the figure) .As in the third embodiment, the rotation of the shaft core 31 may be output to the resistance application unit RA that generates the resistance force as the code CD moves.At this time, when the code CD moves forward, the rotation is transmitted to the resistance imparting portion RA, but when the cord CD moves backward, the knurling 240 or the knurling 240 Way clutch may be provided between the resistance applying portion RA and the one-way clutch.Here, the resistance applying portion RA may be provided inside or outside the case 10 </ b> B, or may be provided inside the knurled portion 240.

On the other hand, if a tension is applied to the code CD in the opposite direction to the arrow D 2, the operation in the direction opposite to the above operation occurs, so that the distance between the knurl 240 and the support 92 in the vertical direction is apart and the clamping force against the code CD is weakened .

Then, as shown in FIG. 40 (a), the shaft core 31 is opposed to the gravitational force g and has a second side wall 119 </ b> A which is a position on the upper side in the movable direction (oblique direction in FIG. 40) having the vertical component of the first side wall hole 119 < Move to position. Such a state is referred to as a free movement state.In the free movement state, the code CD is released in a non-flexed state.Then, free movement of the code CD can be permitted.

It is to be noted that instead of the shaft core 31 and the knurled portion 240 and the shaft core 41 and the roller portion 42, it is also possible to use a support which does not rotate.

In other words, the device using the member according to the fourth embodiment is a damper including a motion converting portion for converting movement of a cord into motion of another member, and the motion converting portion includes a clamping body Wherein the clamping body sandwiches the cord when the cord and the clamping body moves in one direction relative to each other and releases the cord in a non-bending state when the cord and the clamping body relatively move in the other direction So that the clamping state is changed to a damper.Here, releasing the code means a state allowing movement of the code, regardless of contact / non-contact between the cord and the clip.

Further, the damper according to the fourth embodiment includes a roller configured to be movable in a movable direction having a vertical component with respect to a ground contact surface of the damper, and the roller is disposed at a first position, which is a lower position in the movable direction When the cord is positioned, the cord is sandwiched between the roller and the clamping member, and the cord is released in a non-bent state when the roller is located at the second position which is the upper position in the movable direction .

It should be noted that the first position and the second position are not absolutely defined, and a position relatively higher than the first position in the vertical direction may be set as the second position.Further, the shaft core 41 and the roller portion 42 can be omitted as necessary.

Further, in the apparatus using the member according to the fourth embodiment, the frictional force acting between the knurled wheel 240 and the cord CD when the knurl 240 is positioned at the second position is such that the knurl 240 is located at the first position The knurled portion 240 is configured to move such that the friction force acting between the knurled portion 240 and the cord CD is smaller than the frictional force acting between the knurled portion 240 and the cord CD.

Similarly to the third embodiment, in the case of outputting the rotation of the shaft core 31 to the resistance application section RA for generating the resistance force in accordance with the movement of the cord CD, the apparatus using the member according to the fourth embodiment When the knurl 240 is in the first position, outputs the rotation of the knurled joint 240 due to the movement of the cord CD to the resistance application part RA, and when the knurl 240 is positioned in the second position, it is caused by the movement of the cord CD So that the rotation of the knurled portion 240 is not output to the resistance application portion RA.

### <Action / Effect>

By adopting the configuration as described above, the following actions and effects can be obtained.
(1) Since the bending resistance is not bent (unbending) during free movement of the code CD, the bending resistance becomes small, and the code CD can move more smoothly.
(2) By changing the frictional force acting between the knurl 240 and the code CD by the displacement of the knurl 240, the code CD is released in a non-bending state.
(3) Due to the displacement of the knurls 240, whether or not the rotation caused by the movement of the code CD is transmitted to the resistance application portion RA is switched, whereby the code CD is released in the non-bending state.
(4) It is possible to reduce the operating force at the time of pulling operation and securely hold the cord CD at the time of automatic operation (automatic descent), thereby preventing unintentional falling.

### 5. Fifth embodiment

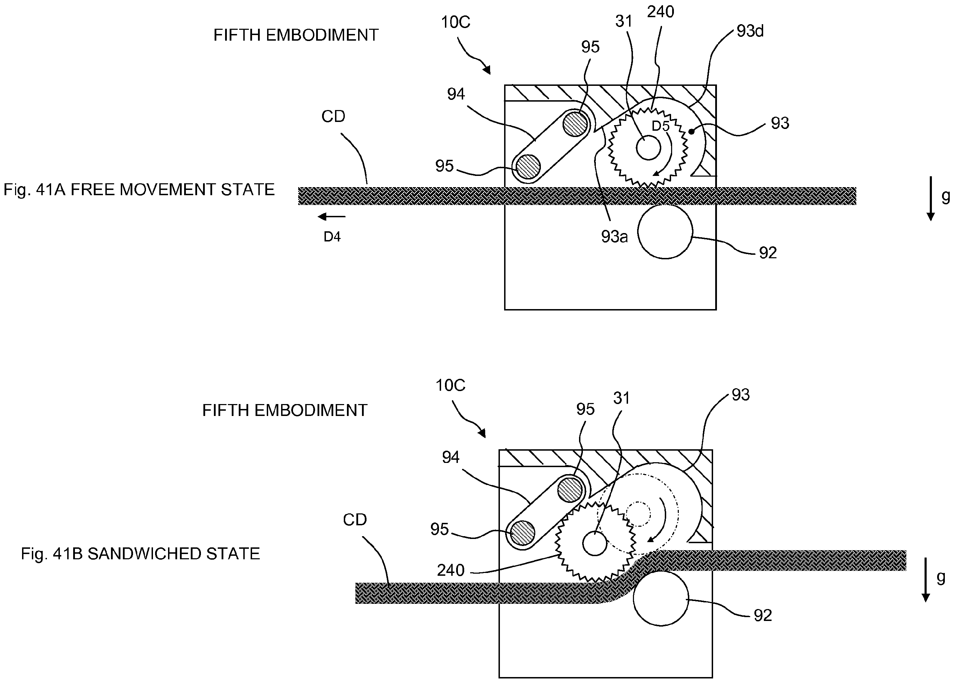

Next, another motion converting unit according to the fifth embodiment of the present invention will be described with reference to FIG. 41. As shown in FIG. 41, in the case 10 </ b> C according to the fifth embodiment, a housing space 93 slightly larger than the diameter of the knurled portion 240 is formed.Here, the housing space 93 has a shape combining an arc shape and a half linear shape in cross section.Therefore, the knurls 240 can move freely within the accommodation space 93.Further, in the housing space 93, a clamping guide inclined surface 93 a and a release-side restricting surface 93 d are formed.

Inside the case 10 </ b> C, the shaft core 31, the knurls 240, the support columns 92, the two output shafts 95, and the endless belt 94 are disposed.The knurls 240 are provided to make slight contact with the cord CD in the free movement state.

The knurls 240 are provided so as to sandwich the cord CD between them and the roller portion 42.Then, the endless belt 94 is stretched over the two output shafts 95.The resistance of the endless belt 94 is exerted by the rotation of the knurl 240, and the endless belt 94 is configured to be rotatable.Alternatively, if possible, the surface of the endless belt 94 may be shaped so as to engage with the surface of the knurling 240 and the output shaft 95.Further, the output shaft 95 is configured to output its rotation to a resistance applying section that generates a resistance force as the code CD moves.The output shaft 95 and the endless belt 94 are configured such that the endless belt 94 is substantially aligned with the half straight portion of the housing space 93.

First, when tension is applied to the code CD in the direction of the arrow D 4 from the state shown in FIG. 41 (a), the knurl 240 is rotated in the direction of the arrow D 5 by the frictional force generated between the code CD and the accommodation space 93 in the direction approaching the endless belt 94 (first position).As shown in FIG. 41 (b), in such a state, since the distance between the knurl 240 and the support 92 in the vertical direction is small, the cord CD bends and enters a clamping state.That is, the support column 92 functions as a clamping member positioned with the cord CD sandwiched between the knurls 240.

In the clamped state, as in the third embodiment, the rotation of the output shaft 95 may be output to the resistance application unit RA.That is, the endless belt 94 rotates in the direction opposite to the arrow D 5 (counterclockwise) with respect to the output shaft 95 by the frictional force acting between the knurl 240 and the endless belt 94.As a result, the output shaft 95 also rotates (rotates) in the same direction (counterclockwise) as the endless belt 94.And outputs such rotation to the resistance application section RA.In such a configuration, one of the output shafts 95 exhibits the same function (transmission of rotation to the resistance applying portion RA) as the axis center 31 in the third embodiment.At this time, when the code CD moves forward, the rotation is transmitted to the resistance application section RA, but when the code CD moves backward, the knurl 240 and the resistance application section RA A one-way clutch may be provided.

On the other hand, if a tension is applied to the code CD in the opposite direction to the arrow D 4, a movement in the direction opposite to the above operation occurs, so that the distance between the knurl 240 and the support 92 in the vertical direction is apart and the clamping force against the code CD is weakened .

Then, as shown in FIG. 41 (a), the shaft core 31 moves against the gravity g to a second position which is a position away from the endless belt.Such a state is referred to as a free movement state.In the free movement state, the code CD is released in a non-flexed state.Then, free movement of the code CD can be permitted.

It is also possible to use an axis core and a roller portion instead of the support column 92.

In other words, the device using the member according to the fifth embodiment is a damper including a motion converting portion that converts movement of a cord into motion of another member, and the motion converting portion includes a clamping body Wherein the clamping body sandwiches the cord when the cord and the clamping body move in one direction relative to each other and releases the cord in a non-bent state when the cord and the clamping body relatively move in the other direction So that the clamping state is changed to a damper.

Further, the damper according to the fifth embodiment includes a roller configured to be movable in a movable direction having a vertical component with respect to a ground contact surface of the damper, and the roller is disposed at a first position that is a lower position in the movable direction When the cord is positioned, the cord is sandwiched between the roller and the clamping member, and the cord is released in a non-bent state when the roller is located at the second position which is the upper position in the movable direction .Here, releasing the code means a state allowing movement of the code, regardless of whether the cord and the clip member are in contact or non-contact.

Further, in the device using the member according to the fifth embodiment, the frictional force acting between the knurled 240 and the cord CD when the knurl 240 is positioned at the second position is such that the knurl 240 is located at the first position The knurled portion 240 is configured to move such that the friction force acting between the knurled portion 240 and the cord CD is smaller than the frictional force acting between the knurled portion 240 and the cord CD.

Similarly to the third embodiment, in the case where the rotation of the output shaft 95 is output to the resistance application section RA that generates the resistance force in accordance with the movement of the code CD, the apparatus using the member according to the fifth embodiment When the knurl 240 is in the first position, outputs the rotation of the knurled joint 240 due to the movement of the cord CD to the resistance application part RA, and when the knurl 240 is positioned in the second position, it is caused by the movement of the cord CD So that the rotation of the knurled portion 240 is not output to the resistance application portion RA.

### <Action / Effect>

By adopting the configuration as described above, the following actions and effects can be obtained.
(1) Since the bending is not bent (unbending) during free movement of the code CD, the resistance is reduced and the code CD can move more smoothly.
(2) By changing the frictional force acting between the knurl 240 and the code CD by the displacement of the knurl 240, the code CD is released in a non-bending state.
(3) Due to the displacement of the knurls 240, whether or not the rotation caused by the movement of the code CD is transmitted to the resistance application portion RA is switched, whereby the code CD is released in the non-bending state.
(4) It is possible to reduce the operating force at the time of pulling operation and securely hold the cord CD at the time of automatic operation (automatic descent), thereby preventing unintentional falling.
(5) When applying a brake, it is possible to output the resistance force from the cord to the resistance applying portion, and to separate the resistance force from the cord from the resistance applying portion when permitting free movement of the cord.

### 6. Sixth Embodiment

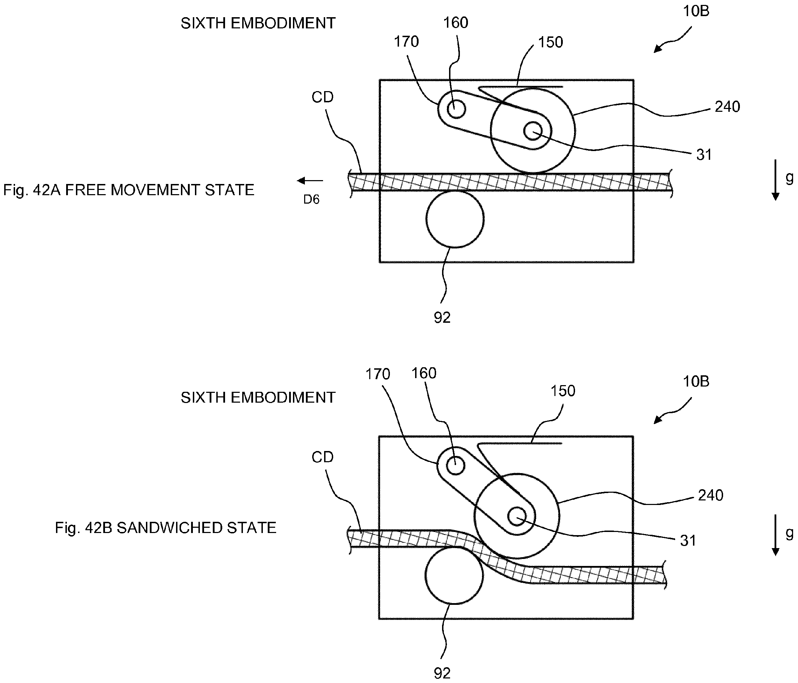

Next, a motion converting unit according to a sixth embodiment of the present invention will be described with reference to FIG. 42. The sixth embodiment is a modification of the fourth embodiment.Therefore, only the changes from the fourth embodiment will be described below.As shown in FIG. 42, in the sixth embodiment, it is possible to say that the axis core 31 and the knurled 240 descend downward by utilizing the gravity g, and that the gravity g was used as the biasing member .In contrast, in the sixth embodiment, as shown in FIG. 42, the shaft core 31 is connected to the fixed shaft 160 by the connecting member 170.Here, for example, the plate 800 of FIG. 38 can be used as the connecting member 170.A spring 150 is attached to the connecting member 170.As a result, the connecting member 170 is urged in the direction of the arrow g around the fixed shaft 160, thereby urging the shaft core 31 and the knurling 240 in the direction of the arrow g.

When a tension is applied to the code CD in the direction of the arrow D 6 from the free movement state shown in FIG. 42 (a), due to the frictional force generated between the code CD and the code CD, the shaft core 31 and the knurled 240 also move in the direction of the arrow D 6 .At this time, the linking member 170 pivots clockwise around the fixed shaft 160, whereby the shaft core 31 and the knurled link 240 move in the direction of the arrow g.As a result, the state shifts to the clamping state shown in FIG. 42 (b).

When a tension is applied to the code CD in a direction opposite to the arrow D 6, the state shifts from the clamping state shown in FIG. 42 (b) to the free movement state shown in FIG. 42 (a).

In other words, in the device using the member according to the sixth embodiment, the frictional force acting between the knurl 240 and the cord CD when the knurl 240 is positioned at the second position is such that the knurl 240 is located at the first position The knurled portion 240 is configured to move such that the friction force acting between the knurled portion 240 and the cord CD is smaller than the frictional force acting between the knurled portion 240 and the cord CD.

Similarly to the sixth embodiment, in the case of outputting the rotation of the shaft core 31 to the resistance application section RA for generating the resistance force in accordance with the movement of the code CD, the apparatus using the member according to the sixth embodiment When the knurl 240 is in the first position, outputs the rotation of the knurled joint 240 due to the movement of the cord CD to the resistance application part RA, and when the knurl 240 is positioned in the second position, it is caused by the movement of the cord CD So that the rotation of the knurled portion 240 is not output to the resistance application portion RA.

### <Action / Effect>

By adopting the configuration as described above, the following actions and effects can be obtained.
(1) Since the bending resistance is not bent (unbending) during free movement of the code CD, the bending resistance becomes small, and the code CD can move more smoothly.
(2) By changing the frictional force acting between the knurl 240 and the code CD by the displacement of the knurl 240, the code CD is released in a non-bending state.
(3) Due to the displacement of the knurls 240, whether or not the rotation caused by the movement of the code CD is transmitted to the resistance application portion RA is switched, whereby the code CD is released in the non-bending state.
(4) It is possible to reduce the operating force at the time of pulling operation and securely hold the cord CD at the time of automatic operation (automatic descent), thereby preventing unintentional falling.

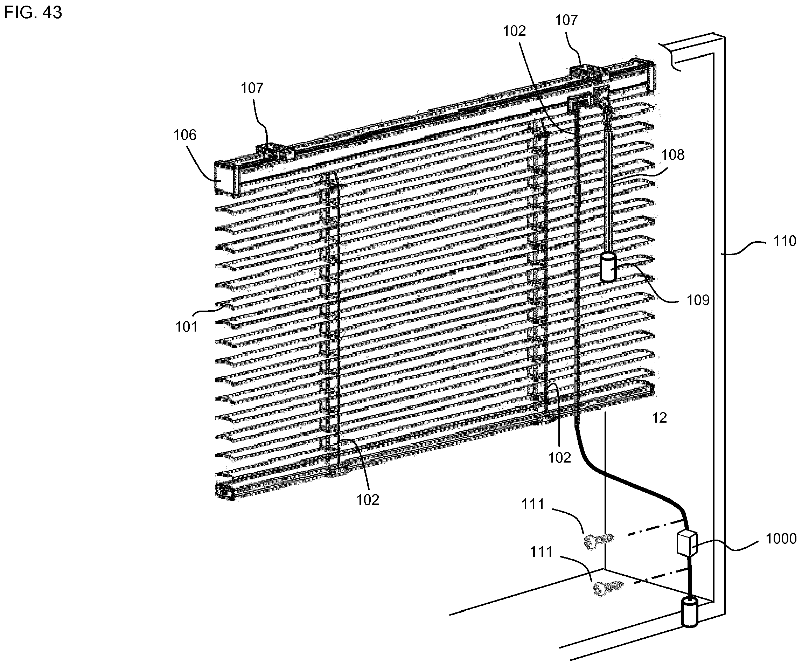

While the braking devices of the embodiments of the present invention have been described, the brakes may be mounted in any position. Instead of disposing the braking device 1000 in the head box, as shown in Fig. 10 of the first embodiment, the braking device 1000 may be fixed to the window frame 110 using the screws 111 or the like, as shown in Fig. 43. Or, the braking device 1000 may be disposed in the grip 109. Or, the braking device 1000 may be disposed in any location along the path through which the hoisting cord 102 is passed.

### Industrial Applicability

As described above, the present invention provides braking devices configured to release cords in a non-bent state so that the operation force required to pull the cords is reduced and the behavior of slats is stabilized during an automatic fall, and a sunlight shielding device using any one of the braking devices. The braking devices and sunlight shielding device can be used in the field of daily necessaries or the like.

### DESCRIPTION OF REFERENCE NUMERALS

10A to 10C: case, 31, 41: shaft, 50: pinion gear, 70: base, 200: arrangement member, 220: slider, 240: knurled roller, 260: internal gear-provided carrier, 280: planetary gear, 300: plate, 320: sun gear-provided weight holder, 340: weight

## Claims

1. A braking device for braking movement of a cord, comprising
a movement converter configured to convert movement of a cord into movement of another member, wherein
the movement converter comprises a sandwiching object configured to allow the cord to be sandwiched, and
the sandwiching object is configured to change a sandwiched state so that the cord is sandwiched by the sandwiching object when the cord and the sandwiching object move relatively in one direction and the cord is released in a non-bent state when the cord and the sandwiching object move relatively in another direction.

2. The braking device of Claim 1, further comprising a resistance provider configured to, when the cord moves relatively in the one direction, generate resistance in association with movement of the cord.

3. The braking device of Claim 1 or 2, wherein
the sandwiching object comprises:
a roller disposed in a position in which the roller can contact the cord and configured to be movable in a predetermined range; and
a sandwiching member disposed so that the cord is sandwiched between the sandwiching member and the roller, and
the roller is configured to move to a first position when the cord and the roller move relatively in one direction and to move to a second position when the cord and the roller move relatively in another direction.

4. The braking device of Claim 3, wherein the roller is configured to be always kept in contact with the cord between the first position and the second position.

5. The braking device of Claim 3 or 4, wherein the roller comprises an energizer configured to energize the roller so that the roller moves in a direction in which the roller contacts the cord.

6. The braking device of any one of Claims 3 to 5, wherein
the cord is sandwiched between the roller and the sandwiching member when the roller is located in the first position, and
the cord is released in a non-bent state when the roller is located in the second position.

7. The braking device of any one of Claims 3 to 6, wherein
the sandwiching member is a slope formed on a fixed member, and
the roller moves along the slope so as to approach the cord.

8. The braking device of Claim 6 or 7, wherein
the roller is configured to move so that friction acting between the roller and the cord when the roller is located in the second position becomes smaller than friction acting between the roller and the cord when the roller is located in the first position.

9. The braking device of Claim 8, further comprising a resistance provider configured to provide rotational resistance to the roller, wherein
the roller is configured to be rotatable in accordance with movement of the cord in the one direction, and
the roller continuously transmits rotation to the resistance provider even if the roller moves from the first position to the second position.

10. The braking device of any one of Claims 3 to 8, further comprising a resistance provider configured to, when the cord moves relatively in the one direction, generate resistance in association with movement of the cord, wherein
when the roller is located in the first position, rotation of the roller caused by movement of the cord is outputted to the resistance provider, and
when the roller is located in the second position, rotation of the roller caused by movement of the cord is not outputted to the resistance provider.

11. The braking device of Claim 10, wherein the roller transmits rotation to the resistance provider directly or through a transmitter.

12. The braking device of Claim 6, wherein
the roller is configured to be movable in a movable direction including a vertical component with respect to a grounding surface of the braking device,
when the roller is located in a first position which is a lower position in the movable direction, the cord is sandwiched between the roller and the sandwiching member, and
when the roller is located in a second position which is an upper position in the movable direction, the cord is released in a non-bent state.

13. The braking device of Claim 10, further comprising an auxiliary roller configured to move in conjunction with the roller, wherein
when the roller is located in the first position, the cord is sandwiched between the roller, the sandwiching member, and the auxiliary roller.

14. The braking device of Claim 6, further comprising:
an output member configured to rotate in the first position in association with rotation of the roller, and
a resistance provider configured to generate resistance in association with rotation of the output member.

15. A shielding device comprising:
the braking device of any one of Claims 1 to 14; and
a sunlight shielding member suspended so as to be able to be raised and lowered in accordance with movement of the cord.

16. A braking device for braking movement of a cord, comprising:
a movement converter configured to convert movement of a cord into movement of another member, wherein
the movement converter comprises sandwiching object configured to allow the cord to be sandwiched, and
the sandwiching object is configured to move along a moving direction of the cord so as to approach the cord.

17. The braking device of Claim 16, wherein
the sandwiching object is a pair of rollers, the braking device further comprising
a holding member configured to hold the pair of rollers and having a pressing surface that moves the pair of rollers synchronously.

18. A braking device for braking a movement of a cord in a longitudinal direction, with struts,
A tension transmission roller that holds the cord between itself and the support pillar and that rotates by the movement of the cord in the longitudinal direction,
A pinion gear that rotates together with the tension transmission roller about a rotation axis of the tension transmission roller,
A ring gear on which an inner peripheral gear meshing with the pinion gear is formed,
A resistance imparting portion for imparting rotational resistance to the ring gear, Comprising:
The pinion gear is movable along at least a part of the inner peripheral surface of the ring gear, Wherein the tension transmission roller is pressed against the cord when the pinion gear moves along one rotation direction of the inner peripheral surface of the ring gear.

19. The braking device according to claim 18, wherein the strut is an idle roller having a rotation axis parallel to a rotation axis of the tension transmission roller.

20. The braking according to claim 18 or 19, wherein the support column moves to the tension transmission roller side with movement of one of the inner peripheral surface of the ring gear of the pinion gear along a rotation direction apparatus. twenty one

21. The braking device according to claim 18, further comprising an urging member that constantly urges the tension transmission roller so that the tension transmission roller is pressed against the strut .

22. The braking device according to any one of claims 18 to 21, wherein the resistance applying section constantly imparts a rotational resistance when the ring gear rotates.

23. The braking device according to any one of claims 18 to 21, wherein the resistance imparting unit imparts a rotational resistance when the rotational speed of the ring gear is a predetermined value or more.

24. The ring gear according to any one of claims 18 to 23, wherein an outer peripheral gear is formed on the outer peripheral surface of the ring gear, and the outer peripheral gear meshes with a gear of the resistance applying portion having a rotational resistance .

25. The braking device according to any one of claims 18 to 23, wherein the resistance applying portion is provided at a position overlapping with the ring gear.

26. The casing for holding the tension transmission roller is formed with concentric circles in plan view with the inner peripheral surface of the ring gear, and a restriction groove is formed in which the axial core of the tension transmission roller is fitted And the braking device according to any one of claims 18 to 25.

27. A braking device according to any one of claims 1 to 26,
And a solar radiation shielding member suspended so as to be able to move up and down by movement of the cord in the longitudinal direction.
